# FASCICULE DE BREVET EUROPEEN

(11) **EP 1 084 334 B1**
(45) Date de publication et mention de la délivrance du brevet: **24.09.2003**
(21) Numéro de dépôt: 99923649.0
(22) Date de dépôt: 02.06.1999
(51) Int. Cl.: F02B 19/04, F02B 75/32, F02B 75/02

(54) **PROCEDE DE FONCTIONNEMENT ET DISPOSITIF DE MOTEUR A INJECTION D'AIR COMPRIME ADDITIONNEL FONCTIONNAT EN MONO-ENERGIE, OU EN BI-ENERGIE BI OU TRI MODES D'ALIMENTATION**
BETRIEB EINER EINSPRITZBRENNKRAFTMASCHINE MIT ADDITIONELLER PRESSLUFT
ERFAHREN

(30) Priorité: 03.06.1998 FR 9807131
(43) Date de publication de la demande: 21.03.2001
(73) Titulaire: MDI - Motor Development International S.A., Luxembourg (LU)
(72) Inventeur: Negre, Guy, San Remo (IT); NEGRE, Cyril Zone industrielle 3405, 06516 Carros Cedex (FR)
(86) Numéro de dépôt international: FR9901288
(87) Numéro de publication internationale: WO99063206

(56) Documents cités:
- WO-A-96/27737
- WO-A-97/38213
- WO-A-97/39232
- DE-A- 19 515 325
- FR-A- 390 489
- FR-A- 2 319 769
- FR-A- 2 416 344
- FR-A- 2 581 702
- FR-A- 2 601 071
- FR-A- 2 731 472

## Description

L'invention concerne les véhicules terrestres et plus particulièrement ceux fonctionnant avec injection d'air comprimé additionnel, et comportant un réservoir d'air comprimé haute pression.

Les moteurs à combustion interne cyclique et à chambre de combustion indépendante et chambre de compression et de détente séparées tels que décrits dans les brevets français 2319769 ou encore 2416344 permettent un certain nombre d'améliorations du fonctionnement par rapport aux moteurs conventionnels, mais le temps imparti aux transferts et à la combustion des gaz est très court et ne permet pas de bons rendements.

L'auteur a décrit dans sa demande brevet publié WO 97/39232 un procédé de moteur à combustion interne cyclique, à chambre de combustion indépendante à volume constant dans lequel la chambre d'aspiration-compression, la chambre de combustion, et la chambre de détente-échappement sont constituées de trois parties séparées et entièrement indépendantes et où le cycle de la chambre d'aspiration compression est décalé en avance par rapport à celui de la chambre de détente échappement afin de permettre des temps de combustion importants. Un des principaux avantages de ce procédé est que le mélange brûle à volume réellement constant durant une période plus importante que dans un moteur classique.

Une des difficultés de ce type de moteur est le temps d'établissement de la pression dans la chambre de détente lors du transfert des gaz entre la chambre de combustion et la chambre de détente.

Pour résoudre ce problème et dans une autre demande de Brevet Français 9713313, l'auteur a décrit un procédé de contrôle du mouvement de piston de machine telle que moteur ou compresseur, caractérisé par le fait qu'à son point mort haut le piston est arrêté dans son mouvement et maintenu à sa position point mort haut durant une période de temps - donc sur un secteur angulaire important lors de la rotation-permettant d'effectuer à volume constant :
- les opérations d'allumage et de combustion dans le cas des moteurs classiques,
- les opérations d'injection de carburant dans le cas des moteurs diesel
- les opérations de transfert de gaz et/ou d'air comprimé respectivement, dans le cas des moteurs à chambre de combustion et/ou d'expansion indépendante,
- les opérations de fin d'échappement, de début d'admission dans tous les cas de moteurs et autres compresseurs.

L'arrêt du piston et son maintien au point mort haut peut être réalisé par tous moyens connus de l'homme de l'art, par exemple cames, pignons etc... mais préférentiellement, pour permettre l'arrêt du piston à son point mort haut, la commande du piston est mise en oeuvre par un dispositif de levier à pression lui-même commandé par un système bielle manivelle. On appelle levier à pression un système de deux bras articulés dont l'un a une extrémité immobile, ou pivot, et l'autre peut se déplacer suivant un axe. Si l'on exerce une force approximativement perpendiculaire à l'axe des deux bras, lorsqu'ils sont alignés, sur l'articulation entre ces deux bras, on provoque alors le déplacement de l'extrémité libre. Cette extrémité libre peut être liée au piston et commander ses déplacements. Le point mort haut du piston est effectif lorsque sensiblement les deux tiges articulées sont dans le prolongement l'une de l'autre (aux environs de 180°).

Le vilebrequin est relié par une bielle de commande à l'axe d'articulation des deux bras. Le positionnement des différents éléments dans l'espace et leurs dimensions permettent de modifier les caractéristiques de la cinématique de l'ensemble. Le positionnement de l'extrémité immobile détermine un angle entre l'axe de déplacement du piston et l'axe des deux bras lorsqu'ils sont alignés. Le positionnement du vilebrequin détermine un angle entre la bielle de commande et l'axe des deux bras lorsqu'ils sont alignés. La variation des valeurs de ces angles, ainsi que des longueurs de bielles et bras, permet de déterminer l'angle de rotation du vilebrequin durant lequel le piston est arrêté à son point mort haut. Ceci correspond à la durée de l'arrêt du piston.

Dans ce type de moteur, le transfert des gaz, et, notamment en mode thermique des gaz brûlés de la chambre de combustion vers la chambre de détente, s'effectue à haute température et la réalisation du système d'ouverture et de fermeture à ces températures sont de réalisation délicate

La présente invention vise à résoudre d'une autre manière ce problème de transfert de pression de la chambre de combustion à la chambre de détente, en proposant un procédé de moteur à chambres séparées, d'aspiration-compression, de détente-échappement et de combustion et/ou d'expansion à volume constant séparées dans lequel est monté au moins sur la chambre de détente-échappement un dispositif de contrôle de la course du piston permettant l'arrêt de ce dernier à son point mort haut. La chambre de combustion et/ou d'expansion est montée jumelée sans obturateur sur la partie haute de la chambre de détente-échappement, le piston séparant sensiblement la chambre de combustion de la chambre de détente-échappement à son point mort haut. En outre, le cycle de fonctionnement du cylindre aspiration compression peut être décalé en retard par rapport au cycle du cylindre détente échappement de telle sorte que le point mort haut de piston du cylindre de détente échappement, est, lors de la rotation du moteur, en avance sur le point mort haut du piston du cylindre aspiration-compression. Dès que le piston du cylindre de détente est arrêté à son point mort haut, où il obture partiellement la chambre de combustion, il se trouve en avance par rapport au point mort haut du piston de la chambre aspiration compression, et reste à son point mort haut pendant les opérations suivantes :
- la mise en communication de la chambre de combustion et de la chambre d'aspiration compression,
- le remplissage de ladite chambre de combustion avec le mélange air-carburant comprimé par le piston de la chambre d'aspiration-compression arrivant à son point mort haut,
- la fermeture de la communication entre la chambre de combustion et la chambre d'aspiration-compression,
- l'allumage et la combustion du mélange qui génère une augmentation de pression.
puis, dès le début de sa course descendante, produit un travail provoque par l'augmentation de pression. La combustion s'effectue à volume réellement constant puis le mélange est détendu directement sans transfert dans la chambre de détente produisant le travail moteur dès le début de la course descendante du piston de détente échappement.

Le terme « réellement constant » qui vient d'être utilisé renvoi à l'état de la technique qui dans le langage courant emploi le terme « combustion à volume constant » alors que le piston dans un moteur classique est toujours en mouvement et qu 'en conséquence le volume n'est en réalité jamais constant.

Ces avantages combinés, d'une longue durée de combustion, dans une chambre de combustion compacte, permettent d'obtenir des émissions de polluants à l'échappement bien plus faibles que dans les moteurs conventionnels.

Selon un mode particulier du procédé suivant l'invention, il est possible de ménager entre la chambre de compression et la chambre de combustion, une capacité tampon d'accumulation d'air comprimé qui va permettre d'éviter les effets de pompages, et les pertes de pression dues aux volumes morts de transfert et à la détente lors du remplissage de la chambre de combustion.

Le mode de fonctionnement de la chambre aspiration-compression peut alors vaner sans pour autant changer le principe de l'invention : s'il apparait commode d'utiliser en pratique courante un compresseur à piston, tout autre mode de production d'air comprimé peut être utilisé - compresseur à un ou plusieurs étages à piston, rotatif à palettes, à engrenages (Roots, Lyshom) ou turbo compresseur entraîné par les gaz d'échappement ; de même que pour certaines applications il est possible d'utiliser une réserve d'air en bouteille (ou tout autre container) qui sera détendu dans la chambre de combustion, voire encore de l'air comprimé d'un réseau (exemple d'un moteur a poste fixe dans une usine utilisant de l'air comprimé en réseau)

Préférentiellement, la chambre de combustion jumelée est d'une forme se rapprochant d'une sphère sans aspérité ni recoin pour une meilleure combustion, de même qu'elle est isolée thermiquement en étant revêtue d'une barrière thermique en céramique ou autres matériaux isolants calorifuges permettant de ne pas perdre de calories à travers les parois qui peuvent ainsi être maintenues à très hautes températures, et permettre de ce fait de ne pas éteindre la flamme sur lesdites parois évitant ainsi la production d'hydrocarbures imbrûlés dans les gaz d'échappement. Cette combinaison permet d'améliorer sensiblement les émissions de gaz polluants.

Le procédé de fonctionnement de moteur suivant l'invention permet d'utiliser des mélanges homogènes air-carburant et le mélange peut être réalisé par un carburateur avant l'aspiration-compression, mais un système d'injection (électronique ou mécanique) est préféré. Toutefois une injection directe dans la chambre de combustion peut également être utilisée sans pour autant changer le principe de fonctionnement de l'invention.

Le procédé de fonctionnement de moteur suivant l'invention permet également d'utiliser des mélanges hétérogènes à auto inflammation comme les moteurs diesel. Dans ce cas, la bougie d'allumage implantée dans la chambre de combustion est supprimée et un injecteur direct de gazole alimenté par une pompe et son équipement de type utilisé couramment sur les moteurs diesel, est implanté dans ladite chambre de combustion.

L'invention peut s'appliquer à un fonctionnement bi-energie selon deux modes d'alimentation. L'auteur a décrit dans sa demande de brevet publié WO 96/27737 un procédé de moteur à chambre de combustion interne indépendante, fonctionnant suivant un principe bi-modes à deux types d'énergie, utilisant, soit un carburant conventionnel tel essence ou gasoil sur route (fonctionnement mono-mode à air-carburant), soit, à basse vitesse, notamment en zone urbaine et suburbaine, une injection d'air comprimé dans la chambre de combustion (ou tout autre gaz non polluant) à l'exclusion de tout autre carburant, (fonctionnement au deuxième mode à air, plus air comprimé additionnel.

Selon un autre aspect de la présente invention, le procédé de fonctionnement d'un moteur selon l'invention adopte ce principe bi-energie et bi-mode. En mode air-carburant, le mélange air carburant est aspiré et comprimé dans une chambre d'aspiration-compression indépendante. Puis ce mélange est transféré, toujours en pression, dans la chambre de combustion jumellée avec la chambre de détente-échappement. Lorsque le piston de détente-échappement est arrêté à son point mort haut, la chambre de combustion est à volume constant et le mélange est enflammé afin d'augmenter sa température et sa pression. La combustion se poursuit durant l'arrêt du piston à son point mort haut puis ce mélange est détendu directement sans transfert dans la chambre de détente et d'échappement pour y produire un travail. Les gaz détendus sont ensuite évacués à l'atmosphère à travers un conduit d'échappement.

En mode à air plus air comprimé additionnel, à faible puissance, l'injecteur de carburant n'est plus commandé : Lorsque le piston de détente-échappement est arrêté à son point mort haut. la chambre de combustion est à volume constant et l'on introduit dans la chambre de combustion, sensiblement après l'admission dans cette dernière de l'air comprimé -sans carburant- provenant de la chambre d'aspiration-compression, une dose d'air comprimé additionnel provenant d'un réservoir externe où l'air est stocké sous haute pression, par exemple 200 bars. et à la température ambiante. Cette dose d'air comprimé à température ambiante va s'échauffer au contact de la masse d'air à haute température contenue dans la chambre de combustion qui devient dans ce cas une chambre d'expansion, va se dilater et le mélange des deux masses d'air augmente la pression régnant dans la chambre pour permettre de délivrer lors de la détente un travail moteur.

L'invention peut également s'appliquer à un fonctionnement mono-energie air plus air comprimé additionnel. Dans sa demande de brevet publié WO 97/4884, l'auteur a décrit l'installation de ce type de moteur en fonctionnement mono-mode, avec air plus air comprimé additionnel, sur les véhicules de services, par exemple des autobus urbains, taxis, fourgonnettes de livraison et autres.

Ce type de moteur bi-modes ou bi-énergies (air et essence ou air et air comprimé additionnel) peut en effet être transformé pour une utilisation préférentielle en ville par exemple, sur tous véhicules et plus particulièrement sur des autobus urbains ou autres véhicules de services (taxis bennes à ordures etc.). en mono-mode air-air comprimé additionnel, par la suppression de tous les éléments specifiques de fonctionnement du moteur avec un carburant traditionnel tel que réservoir, circuit carburant, injecteur etc...

Selon une autre caractéristique de l'invention, le procédé de fonctionnement d'un moteur selon l'invention utilise également le principe mono-énergie mono-mode avec l'injection d'air comprimé additionnel dans la chambre de combustion qui devient ainsi une chambre d'expansion. En outre, l'air aspiré par le moteur peut être filtré et purifié à travers un ou plusieurs filtres à charbon ou autre procédé mécanique, chimique, tamis moléculaire, ou autres filtres afin de réaliser un moteur dépolluant. L'emploi du terme «air » dans le présent texte s'entend « tout gaz non polluant ».

Pour un fonctionnement en mode air comprimé, la présente invention propose un autre procédé de fonctionnement de moteur à air comprimé dans lequel est monté un dispositif de contrôle de la course du piston provoquant l'arrêt de ce dernier à son point mort haut. Le cylindre d'aspiration compression est isolé - soit par débrayage, soit rendu inopérant en maintenant ses soupapes ouvertes ou fermées - soit par sa suppression dans le cas où le moteur est prévu pour fonctionner seulement en mono-mode air comprimé. Le moteur fonctionne avec un cylindre de détente- échappement pourvu d'un orifice d'échappement et d'une chambre d'expansion indépendante jumelée. Lors de la course ascendante du piston de ladite chambre de détente-échappement, pendant le cycle d'échappement, l'orifice d'échappement est obturé afin de permettre qu'une partie des gaz détendus soient recomprimés à une température et une pression élevée dans la chambre d'expansion dans laquelle, durant l'arrêt du piston à son point mort haut est injectée une dose d'air comprimé additionnel provenant d'un réservoir de stockage provoquant ainsi dans ladite chambre une augmentation de pression produisant un travail en repoussant le piston dans sa course descendante.

Le moteur fonctionne ainsi avec une détente (donc un temps moteur) à chaque tour de vilebrequin selon un cycle qui, bien que fondamentalement différent, pourrait être comparé à celui d'un moteur 2 temps dans la mesure où il y a une détente à chaque tour moteur

Préférentiellement, le procédé de fonctionnement de moteur selon l'invention comporte un système de récupération d'énergie thermique ambiante tel que décrit par l'auteur dans sa demande de brevet Nr FR 9700851, où l'air comprimé contenu dans le réservoir de stockage sous très haute pression, par exemple 200 bars. et à température ambiante, par exemple 20 degrés C, préalablement à son utilisation finale à une pression inférieure par exemple 30 bars, est détendu à une pression proche de celle nécessaire à son utilisation finale, dans un système à volume variable, par exemple un piston dans un cylindre, produisant un travail qui peut être récupéré et utilisé par tous moyens connus, mécanique, électrique, hydraulique ou autre. Cette détente avec travail a pour conséquence de refroidir à très basse température, par exemple moins 100° C, l'air comprimé détendu à une pression proche de celle d'utilisation. Cet air comprimé détendu à sa pression d'utilisation, et à très basse température est ensuite envoyé dans un échangeur avec l'air ambiant, va se réchauffer jusqu'à une température proche de la température ambiante, et va augmenter ainsi sa pression et/ou son volume, en récupérant de l'énergie thermique empruntée à l'atmosphère.

Encore préférentiellement le procédé de fonctionnement de moteur selon l'invention comporte un système de réchauffage thermique tel que décrit par l'auteur dans sa demande de Brevet FR 9800877, où il propose une solution qui permet d'augmenter la quantité d'énergie utilisable et disponible caractérisée par le fait que l'air comprimé, avant son introduction dans la chambre de combustion et/ou d'expansion, provenant du réservoir de stockage soit directement soit après son passage dans l'échangeur thermique air air et avant son introduction dans la chambre de combustion est canalisé dans un réchauffeur thermique où il va augmenter encore de pression et/ou de volume avant son introduction dans la chambre de combustion et/ou d'expansion augmentant encore ainsi considérablement les performances pouvant être réalisées par le moteur.

L'utilisation d'un réchauffeur thermique présente l'avantage de pouvoir obtenir des combustions continues propres qui peuvent être catalysées ou dépolluées par tous moyens connus dans le but d'obtenir des émissions de polluant infimes.

Un autre aspect suivant l'invention, propose un autre procédé qui permet de faire fonctionner le moteur en bi-énergie - fonctionnement air plus air comprimé additionnel en ville et fonctionnement air plus carburant convenionnel sur route - dans le cas ou la chambre d'aspiration compression a été supprimée. Le cycle d'ouverture et de fermeture de la soupape d'échappement qui s'ouvre à chaque tour moteur sur une partie de la course ascendante du piston varie en cours de fonctionnement pour s'ouvrir durant la course ascendante du piston tous les deux tours. Conjointement, le moteur est équipé d'une admission d'air et de carburant tel que essence, gazole ou autre permettant d'introduire une charge de mélange carburé qui est aspiré durant la course de descente du piston puis comprimé dans la chambre d'expansion qui devient alors une chambre de combustion, dans laquelle le mélange est brûlé puis détendu en produisant un travail en repoussant le piston et évacué ensuite à l'échappement selon le cycle classique d'un moteur à 4 temps.

Selon un autre aspect de l'invention, l'invention propose un procédé de fonctionnement tri-mode bi-énergie où le moteur fonctionne soit avec de l'air comprime sans réchauffe par exemple en circulation urbaine avec une pollution zéro, soit avec de l'air comprimé réchauffé par une combustion externe dans un réchauffeur thermique alimenté par un carburant traditionnel par exemple en circulation suburbaine avec une pollution infime, soit en circulation routière, avec une combustion interne et avec une admission d'air et d'essence (ou tout autre carburant) permettant d'introduire une charge de mélange carburé qui est aspiré durant la course de descente du piston puis comprimé dans la chambre d'expansion qui devient ainsi une chambre de combustion, dans laquelle le mélange est brûlé puis détendu en produisant un travail et évacué à l'atmosphère selon le cycle classique d'un moteur à 4 temps.

Les trois modes de fonctionnement décrits ci-dessus air plus air comprimé additionnel, air plus air comprimé additionnel réchauffé par un brûleur, air plus carburant peuvent être utilisés séparément ou en combinaison, les modes d'ouverture et de fermeture des conduits tant d'échappement que d'admission, les méthodes et dispositifs de passage d'un mode à l'autre, sont commandés par des dispositifs électroniques, électromécaniques, mécaniques ou autres, les carburants ou les gaz employés peuvent varier, sans pour autant changer le principe de l'invention. De même que les soupapes d'admission et d'échappement peuvent avantageusement être commandées par des sytèmes électriques, pneumatiques ou hydrauliques commandés par un calculateur électronique en fonction des paramètres d'utilisation.

D'autres buts, avantages et caractéristiques de l'invention apparaîtront à la lecture de la description, à titre non limitatif, de plusieurs modes de réalisation, faite en regard des dessins annexés où :
- La figure 1 représente schématiquement vu en coupe transversale un mode de réalisation du moteur suivant l'invention où la chambre de détente-échappement est commandée par un système de contrôle de la course du piston et comporte une chambre de combustion jumelée
- La figure 2 représente ce même moteur après avoir introduit le mélange air carburant dans la chambre de combustion au moment de l'allumage
- La figure 3 représente ce même moteur en début de détente.
- La figure 4 représente ce même moteur en cours d'échappement et de compression.
- La figure 5 représente un autre mode de fonctionnement vu schématiquement en coupe transversale où une capacité tampon d'accumulation d'air comprimé est installée entre le compresseur et la chambre de combustion, lors de l'admission du mélange air-carburant comprimé dans la chambre de combustion.
- La figure 6 représente ce même moteur au moment de l'allumage
- La figure 7 représente ce même moteur en cours de détente.
- La figure 8 représente ce même moteur en fin d'échappement
- La figure 9 représente schématiquement, vu en coupe transversale, un moteur selon l'invention équipé d'un dispositif d'injection d'air additionnel pour un fonctionnement en bi-mode bi-énerge.
- La figure 10 représente ce même moteur à son point mort bas en début d'échappement
- La figure 11 représente schématiquement vu en coupe transversale un moteur à air comprimé selon l'invention représenté à son point mort haut
- La figure 12 représente ce moteur en cours d'échappement.
- La figure 13 représente ce moteur en cours de recompression.
- La figure 14 représente vue en coupe transversale ce moteur équipé d'un dispositif de récupération d'énergie thermique ambiante et d'un dispositif de réchauffage à combustion continue.
- La figure 15 représente vu en coupe transversale un moteur bi-énergie à combustion interne selon l'invention en cours d'aspiration
- La figure 16 représente ce moteur au moment de l'allumage
- La figure 17 représente ce moteur durant la détente.
- La figure 18 le représente en cours d'échappement.
- La figure 19 représente vu schématiquement en coupe longitudinale un moteur selon l'invention équipé pour fonctionner en bi-énergie tri-mode.

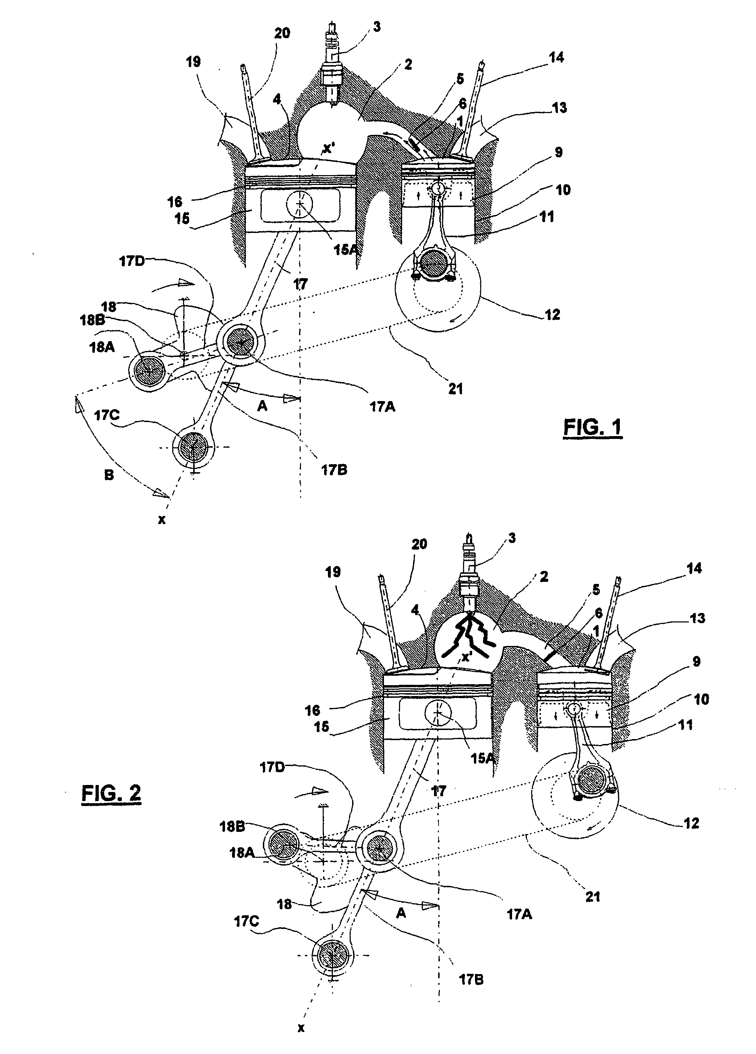

- Les figures 1 à 4 représentent un mode de réalisation du moteur suivant l'invention où les chambres d'aspiration et de compression et de détente et d'échappement sont commandées chacune par un système bielle manivelle et piston coulissant dans un cylindre, vu en coupe transversale où l'on peut voir la chambre de compression 1, la chambre de combustion à volume constant 2 dans laquelle est implantée une bougie d'allumage 3, jumelée avec la chambre de détente 4. La chambre de compression 1 est reliée à la chambre de combustion 2 par un conduit 5 dont l'ouverture et la fermeture sont commandées par un volet étanche 6. La chambre de combustion 2 est jumelée avec la chambre de détente 4 et débouche sur cette dernière en sa partie supérieure

La chambre de compression est alimentée en air comprimé par un ensemble classique de compresseur à piston : un piston 9 coulissant dans un cylindre 10 commandé par une bielle 11 et un vilebrequin 12. Le mélange d'air-carburant frais est admis par un conduit d'admission 13 dont l'ouverture est commandée par une soupape 14.

La chambre de détente commande un ensemble de moteur à piston équipé d'un dispositif de contrôle de la course du piston dans lequel le piston 15 (représenté à son point mort haut), coulissant dans un cylindre 16, est commandé par un levier à pression. Le piston 15 est relié par son axe à l'extrémité libre 15A d'un levier à pression constitué d'un bras 17 articulé sur un axe commun 17A à un autre bras 17B fixé oscillant, sur un axe immobile 17C. Sur l'axe commun 17A aux deux bras 17 et 17B est attachée une bielle 17D de commande reliée au maneton 18A dun vilebrequin 18 tournant sur son axe 18B. Lors de la rotation du vilebrequin la bielle de commande 17D exerce un effort sur l'axe commun 17A des deux bras 17 et 17B du levier à pression, permettant ainsi le déplacement du piston 15 suivant l'axe du cylindre 16, et transmet en retour au vilebrequin 18 les efforts exercés sur le piston 15 lors du temps moteur provoquant ainsi sa rotation. L'axe immobile 17C est positionné latéralement à l'axe de déplacement du piston 15 et détermine un angle A entre l'axe de déplacement du piston et l'axe d'alignement X'X des deux bras 17 et 17B lorsqu'ils sont alignés. Le vilebrequin est positionné latéralement à l'axe du cylindre et/ou du levier à pression et son positionnement détermine un angle B entre la bielle de commande 17D et l'axe d'alignement X'X des deux bras 17 et 17B lorsqu'ils sont alignés. En faisant varier les angles A et B ainsi que les longueurs des différentes bielles et bras on modifie les caractéristiques de la cinématique de l'ensemble pour obtenir une courbe de la course du piston 1 asymétrique et déterminer l'angle de rotation du vilebrequin durant lequel le piston 15 est arrêté à son point mort haut. L'évacuation des gaz brûlés s'effectue à travers un conduit d'échappement 19 dont l'ouverture est commandée par une soupape 20

Le vilebrequin 18 entraîne à même vitesse le compresseur par une liaison 21 avec un décalage angulaire des points morts hauts du piston de détente et du piston du compresseur, ce dernier étant en retard d'un angle de rotation qui est choisi en fonction de la durée de combustion désirée. Le compresseur peut également être monté sur la même vilbrequin où le décalage angulaire des manetons permet de réaliser le décalage des points morts haut sans pour autant changer le principe du dispositif de l'invention qui est montré ici avec une liaison 21 favorisant la simplicité du dessin.

La figure 1 représente le moteur alors que le piston compresseur 9 est proche de son point mort haut et que le volet 6 vient de s'ouvrir pour permettre l'alimentation de la chambre de combustion à volume constant 2 en mélange air carburant frais alors que le piston 15 de la chambre de détente 4 est à son point mort haut et va le rester durant une certaine période de rotation du moteur par exemple 110°.

Poursuivant la rotation dans le sens des aiguilles d'une montre, figure 2, le piston compresseur 9 vient de franchir son point mort haut, et entame sa course descendante ; le volet 6 vient d'être fermé et obture le conduit 5, la soupape d'admission 14 s'ouvre pour permettre le renouveliement en mélange air-carburant frais du compresseur (admission). Dès la fermeture du volet 6 on provoque l'allumage par la bougie 3 et la combustion du mélange air-carburant dans la chambre jumelée au cylindre de détente échappement, à volume constant 2, alors que le piston de détente 15 reste à son point mort haut durant la période de combustion.

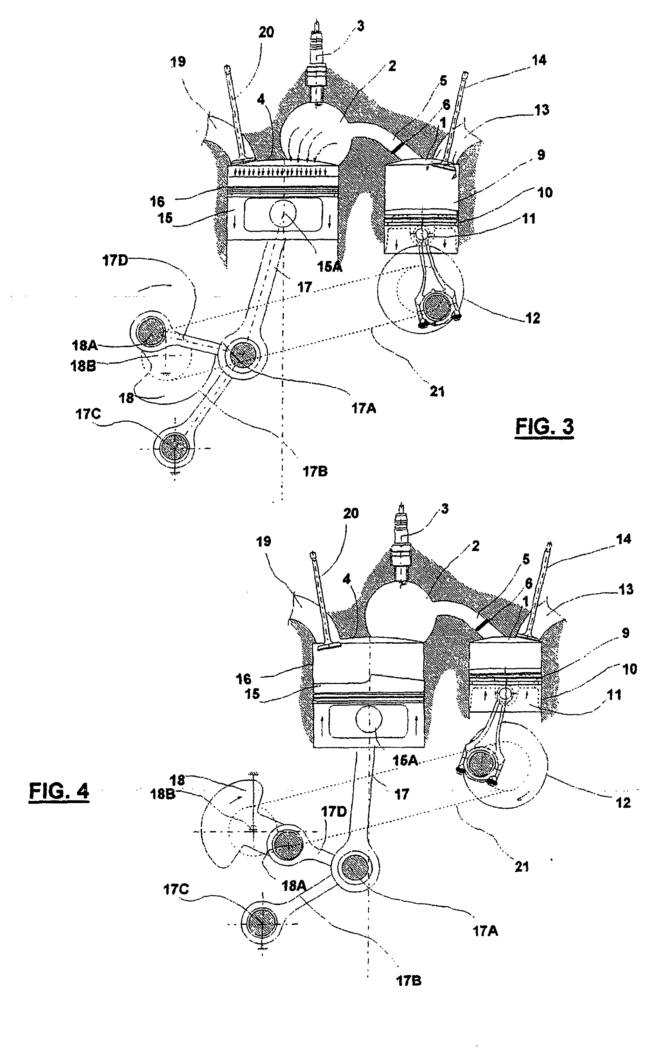

Les vilebrequins 12 et 18 poursuivent leurs rotations figure 3 représenté environ 100° plus tard - le piston de détente 15 vient d'entamer sa course descendante et les gaz sous très haute pression contenus dans la chambre de combustion jumelée 2 se détendent dans la chambre de détente 4 repoussent le piston 15, et assurent ainsi le temps moteur, alors que le piston compresseur 9 est en train de terminer l'admission de mélange carburé frais et que la soupape d'admission 14 se referme.

La détente va se poursuivre sur environ 180 degrés de rotation du vilebrequin, figure 4, la soupape d'échappement 20 s'ouvre, et le piston 15 refoule les gaz brûlés et détendus dans le conduit d'échappement 19, alors que le piston compresseur 9 va comprimer le mélange air-carburant dans la chambre de compression 1 et que l'on va ouvrir le volet 6 pour admettre à nouveau le mélange air-carburant frais dans la chambre à volume constant 2 et recommencer le cycle (fig.1)

On constate aisément qu'à chaque tour de vilebrequin (moteur et compresseur) correspond une détente (ou temps moteur) et que le choix du décalage entre le point mort haut du piston compresseur 9 et le point mort haut du piston de détente 15 ainsi que la durée de l'arrêt du piston de détente 15 dans sa position point mort haut détermine le temps de combustion du mélange dans la chambre de combustion à volume constant 2.

Par ailleurs, le volume de détente déplacé par le piston de détente 15 peut être plus grand que le volume déplacé par le compresseur 9. Cette différence pourra être déterminée en fonction des différences des courbes polytropiques de compression et de détente, dans le but d'obtenir en fin de détente la pression la plus faible possible gage d'un bon rendement et d'émissions sonores faibles.

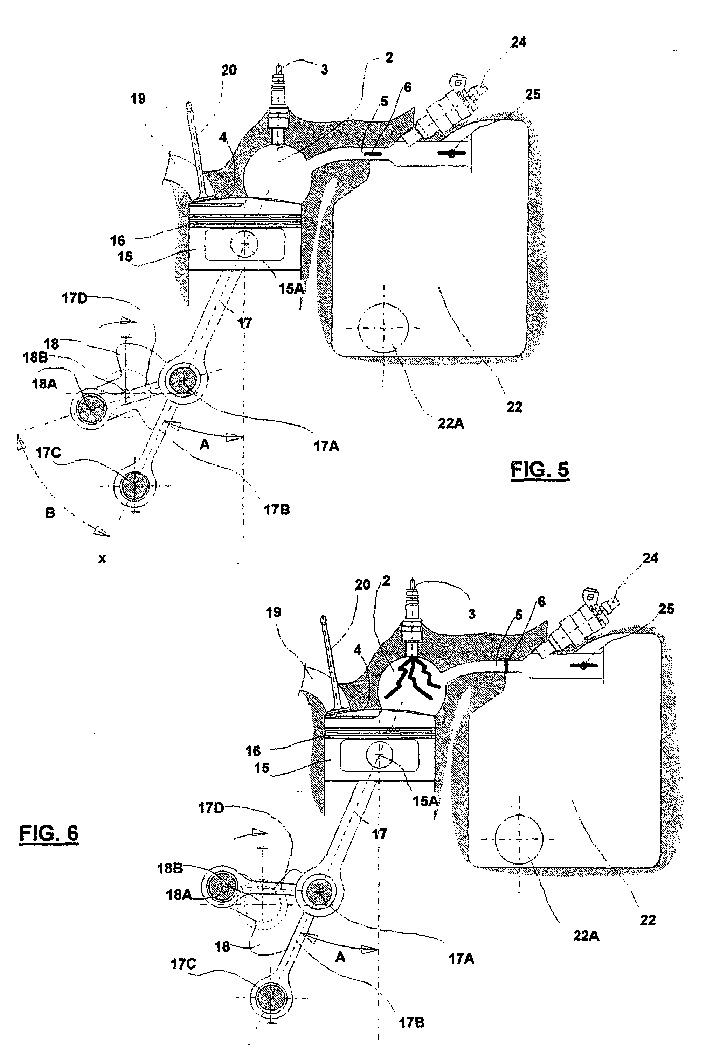

Les figures 5 à 8, représentent vu schématiquement en coupe transversale un autre mode de réalisation de moteur suivant l'invention où l'on introduit entre le compresseur et la chambre de combustion à volume constant 2 une capacité tampon d'air comprimé 22, alimentée en air comprimé par tout moyen approprié à travers un conduit 22A, maintenue à pression sensiblement constante, et qui a pour effet d'éviter certains effets de pompages et les pertes de pression dues au volume mort de transfert et à la détente lors du remplissage de la chambre de combustion 2. Le conduit 5 dont l'ouverture et la fermeture sont commandées par le volet 6 relie la capacité tampon d'air comprimée 22 à la chambre de combustion jumelée 2 avec la chambre de détente et d'échappement (2) et comporte un injecteur de carburant 24 destiné à réaliser le mélange air-carburant sensiblement avant son introduction dans la chambre de combustion 2. Un volet 25 également implanté dans ce conduit permet de régler la charge admise dans la chambre de combustion (accélérateur).

La figure 5 représente le moteur alors que l'on vient d'ouvrir le volet 6 pour admettre à travers le conduit 5 dans la chambre de combustion à volume constant 2 de l'air comprimé mélangé à du carburant pulvérisé par l'injecteur 24, alors que le piston de détente 15 est à son point mort haut après sa course ascendante durant laquelle il a repoussé à l'atmosphère par le conduit 19 (la soupape d'échappement 20 ayant été ouverte), les gaz brûlés et détendus du cycle précèdent.

Dès que le mélange a été introduit dans la chambre de combustion jumelée et indépendante 2, figure 6, on referme le volet 6, et la chambre de combustion indépendante 2 se trouve isolée, on provoque alors l'allumage par la bougie 3 et la combustion du mélange air-carburant dans la chambre de combustion à volume constant 2 alors que le piston de détente 15 reste à son point mort haut.

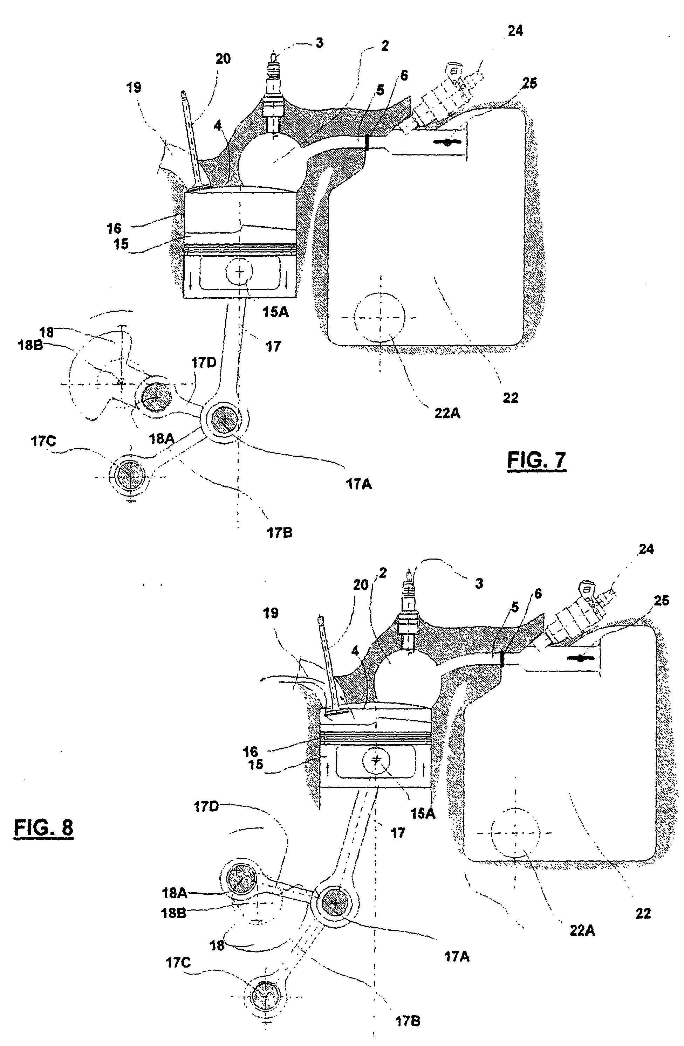

Le vilebrequin 18, poursuit sa rotation figure 7, le piston de détente 15 effectue sa course descendante et les gaz sous très haute pression contenus dans la chambre de combustion jumelée 2 se détendent dans la chambre de détente 4 repoussent le piston 15, et assurent ainsi le temps moteur.

La detente se poursuit sur environ 180 degrés de rotation du vilebrequin 18 jusqu'au point mort bas puis la soupape d'échappement 20 souvre et le piston 15 dans sa course ascendante, figure 8 , refoule les gaz brûlés et détendus dans le conduit d'échappement 19 jusqu'à son point mort haut. Dés lors, on ouvre le volet 6 pour admettre une nouvelle charge de mélange air-carburant frais dans la chambre à volume constant 2 et recommencer le cycle (fig.5)

On constate qu'avec l'introduction d'une capacité tampon d'air compnmé, le principe de fonctionnement du moteur reste le même. Toutefois le compresseur d'air devient totalement indépendant, n'a plus besoin d'être calé angulairement par rapport au vilebrequin moteur 18 et son choix de principe en est ainsi facilité par exemple des compresseurs rotatifs peuvent-ainsi être utilisés. D'autre part, plus le volume de cette capacité sera grand, plus les effets de pompages et de pertes de pression dans le volume de transfert et à ia détente lors du remplissage de la cnamore de combustion seront atténues.

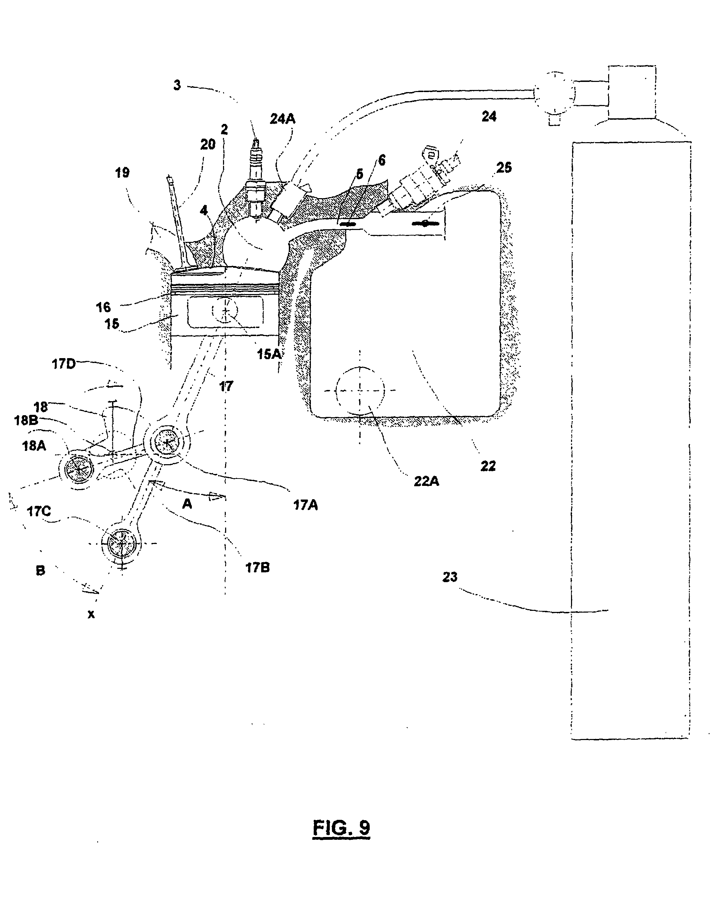

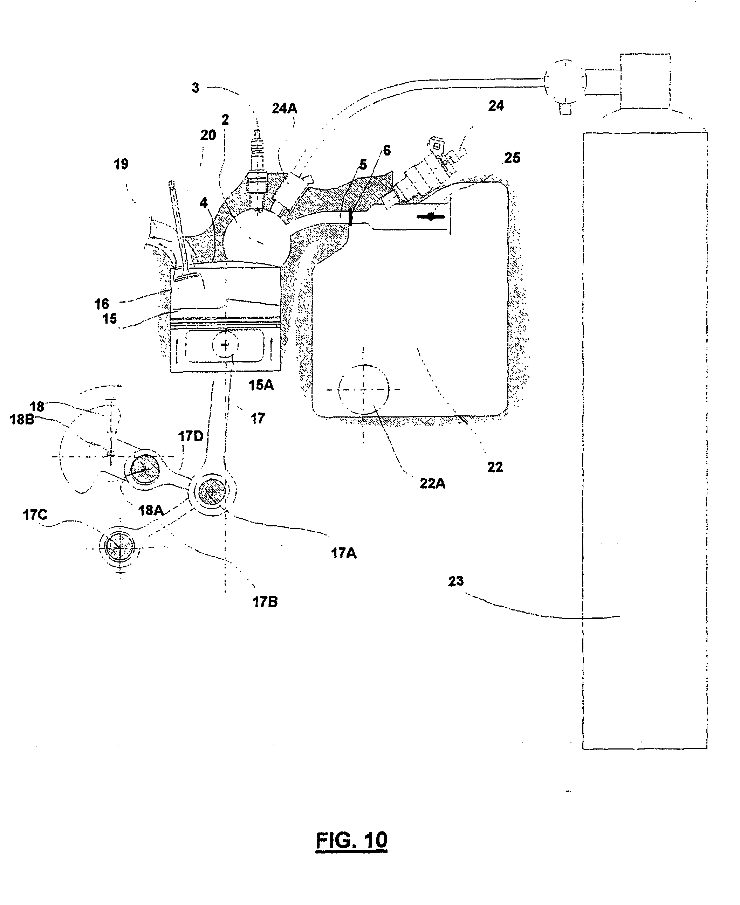

Les figures 9 et 10 représentent un moteur selon l'invention équipé, pour un fonctionnement bi-énergie bi-mode, d'un injecteur d'air additionnel 24A et d'un réservoir de stockage d'air comprimé très haute pression 23 permettant son fonctionnement dépollué en zone urbaine où le moteur fonctionne sans injection de carburant mais avec l'injection d'une dose d'air comprimé additionnel dans la chambre de combustion 2 (qui devient ainsi une chambre d'expansion) pour produire une augmentation de pression. Sur ces figures de moteur à combustion interne cyclique, la chambre de combustion jumelée 2 est alimentée par une capacité tampon d'air comprimé 22, elle-même alimentée en air comprimé par tout moyen approprié à travers un conduit 22A. maintenue à pression sensiblement constante, et qui a pour effet d'éviter certains effets de pompages et les pertes de pression dues au volume mort de transfert et à la détente lors du remplissage de la chambre de combustion 2. Le conduit 5 dont l'ouverture et la fermeture sont commandées par le voiet 6 relie la capacité tampon d'air comprimé 22 à la chambre de combustion 2 jumelée avec la chambre de détente et d'échappement 4 et comporte un injecteur de carburant 24 destine à réaliser le mélange air-carburant sensiblement avant son introduction dans la chambre de combustion 2. Un volet 25 également implanté dans ce conduit permet de régler la charge admise dans la chambre de combustion (accélérateur).

Sur ces mêmes figures 9 et 10 le moteur est également équipé d'un dispositif de contrôle de la course du piston dans lequel le piston 15, coulissant dans un cylindre 16, est commandé par un levier à pression de fonctionnement et de description identique à celui décrit pour la figure 1.

En fonctionnement sur route avec un carburant traditionnel, le moteur fonctionne tel que décrit sur les figures 5 à 8.

En fonctionnement sous faible puissance, l'injecteur de carburant 24 n'est plus actionné et, lorsque, dans sa rotation, le moteur est au point mort haut du piston du cylindre de détente 16, figure 9, seul l'injecteur d'air additionnel 24A est actionné et introduit dans la chambre une dose d'air comprimé additionnel, provenant de la bouteille de stockage sous haute pression 23, détendue sous une pression légèrement supérieure à celle régnant dans la chambre de combustion 2 afin de permettre son transfert, cette masse d'air comprimé additionnel va s'échauffer au contact de l'air comprimé contenu dans la chambre, et le mélange de ces deux masses d'air produit une augmentation de pression sensible afin de produire un travail lors de la détente. La détente se poursuit sur environ 180 degrés de rotation du vilebrequin 18 jusqu'au point mort bas, puis la soupape d'échappement 20 s'ouvre et le piston 15, dans sa course ascendante, figure 10 , refoule les gaz détendus dans le conduit d'échappement 19 jusqu'à son point mort haut.

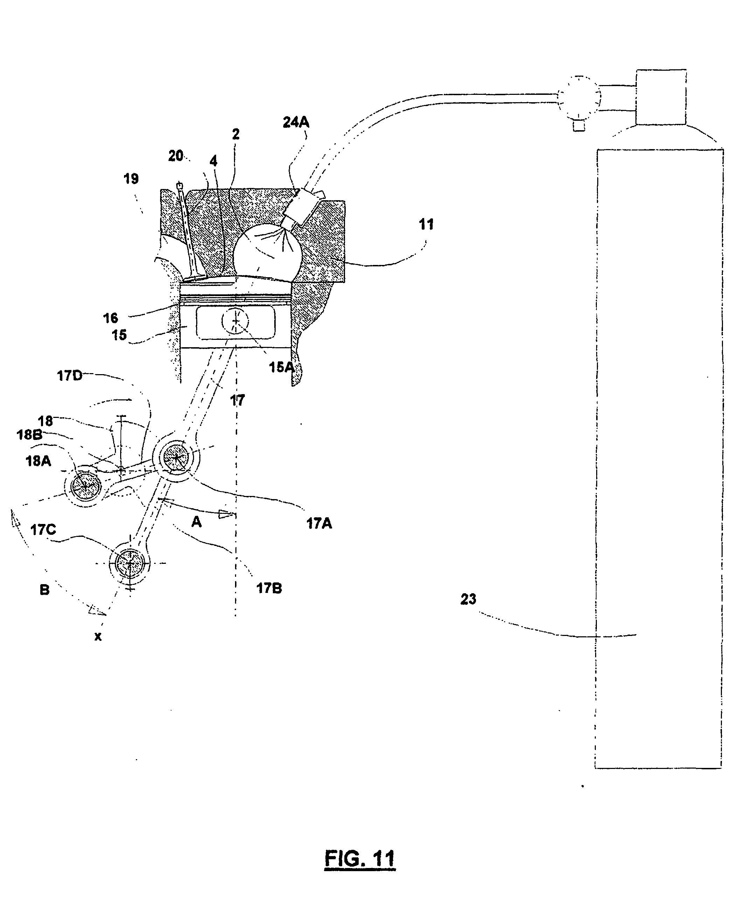

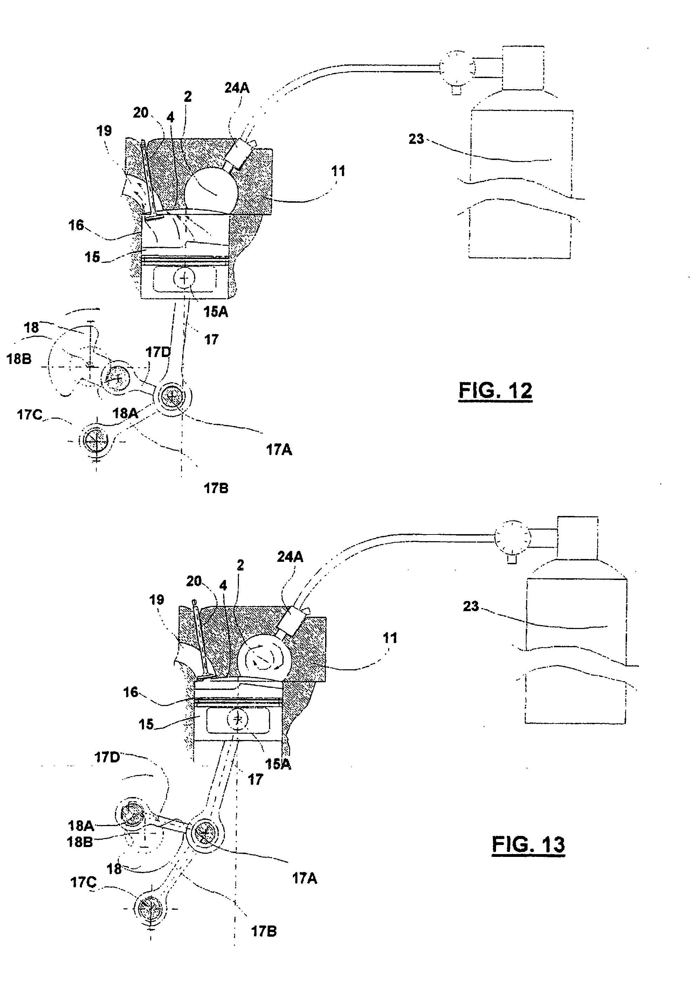

Les figures 11 à 13 montrent schématiquement vu en coupe transversale un moteur mono-énergie air selon l'invention équipé d'un dispositif de contrôle de la course du piston dans lequel le piston 15 (représenté sur la figure 11, à son point mort haut), coulissant dans un cylindre 16, est commandé par un levier à pression. Le piston 15 est relié par son axe à l'extrémité libre 15A d'un levier à pression constitué d'un bras 17 articulé sur un axe commun 17A à un autre bras 17B fixé oscillant, sur un axe immobile 17C. Sur l'axe commun 17A aux deux bras 17 et 17B est attachée une bielle 17D de commande reliée au maneton 18A d'un vilebrequin 18 tournant sur son axe 18B. Lors de la rotation du vilebrequin la bielle de commande 17D exerce un effort sur l'axe commun 17A des deux bras 17 et 17B du levier à pression, permettant ainsi le déplacement du piston 15 suivant l'axe du cylindre 16, et transmet en retour au vilebrequin 18A les efforts exercés sur le piston 15 lors du temps moteur provoquant ainsi sa rotation. L'axe immobile 17C est positionné latéralement à l'axe de déplacement du piston 15 et détermine un angle A entre l'axe de déplacement du piston et l'axe d'alignement X'X des deux bras 17 et 17B lorsqu'ils sont alignés. Le vilebrequin est positionné latéralement à l'axe du cylindre et/ou du levier à pression et son positionnement détermine un angle B entre la bielle de commande 17D et l'axe d'alignement X'X des deux bras 17 et 17B lorsqu'ils sont alignés. En faisant varier les angles A et B ainsi que les longueurs des différentes bielles et bras on modifie les caractéristiques de la cinématique de l'ensemble pour obtenir une courbe de la course du piston 15 asymétrique et déterminer l'angle de rotation du vilebrequin durant lequel le piston est arrêté à son point mort haut. Sur cet ensemble de piston bielles et manivelle est positionné une culasse 11 comportant d'une part un orifice d'échappement 19 dont l'ouverture et la fermeture sont assurées par une soupape d'échappement 20 et d'autre part une chambre d'expansion 2 qui venant d'être alimentée en air comprimé additionnel par un injecteur 24A se trouve ainsi en pression, Figure 11. Lors de la rotation, l'air comprimé contenu dans la chambre d'expansion 2 se détend en repoussant le piston 15 jusqu'à son point mort bas effectuant ainsi le temps moteur, la soupape d'échappement 20 restant fermée durant cette phase. Sensiblement au point mort bas, la soupape d'échappement 20 s'ouvre et le piston 15 dans sa course ascendante, figure 12, repousse à l'atmosphère à travers le conduit d'échappement 19 une partie de l'air comprimé détendu au cycle précédent. Au cours de la course ascendante du piston 15 à un moment déterminé, par exemple à la moitié de ladite course, figure 13, la soupape d'échappement est refermée et le piston va recompnmer le solde des gaz restant dans le cylindre en créant dans la chambre d'expansion 14 une pression et une température élevée (boule chaude). Dès l'arrêt du piston à son point mort haut idem figure 11, l'injecteur 15 est alors actionné pour permettre l'injection d'une dose d'air comprimé additionnel provenant du réservoir de stockage haute pression 23 et créer dans la chambre d'expansion une augmentation de pression pour renouveler le cycle lors de la détente en produisant le travail moteur.

L'homme de l'art peut choisir le moment de la fermeture de l'échappement en fonction des paramètres désirés et choisis tels que la température et la pression finale en fin de compression sans changer pour cela le principe de l'invention.

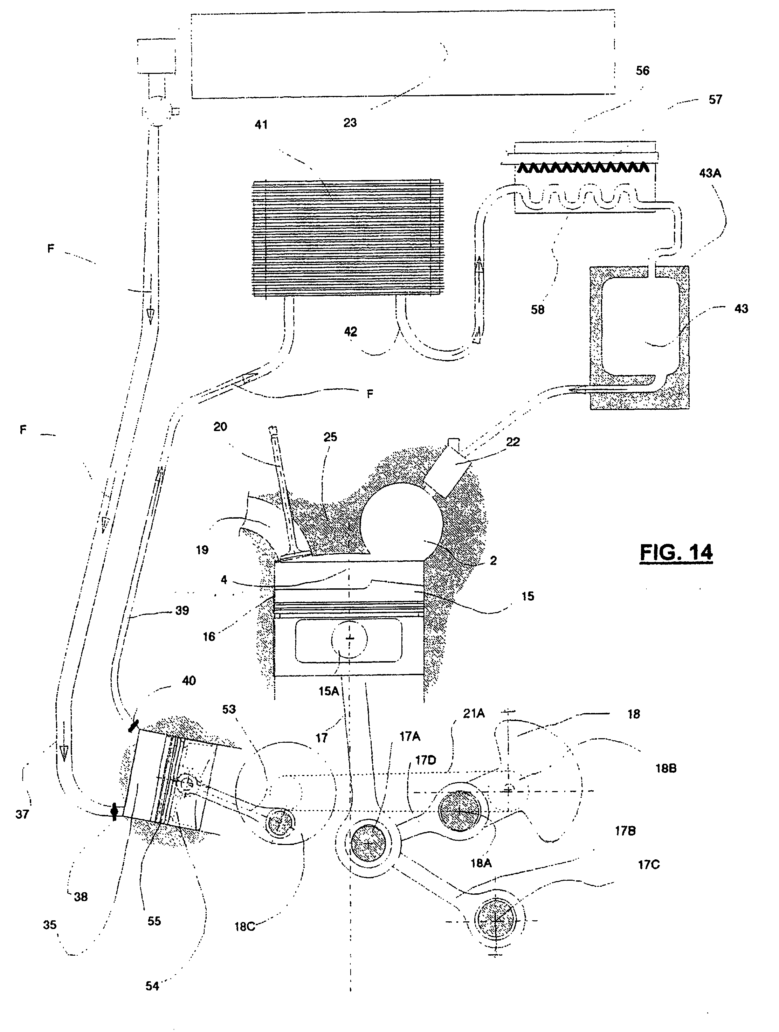

La figure 14 montre un moteur selon l'invention équipé avec des sytèmes de récupération d'énergie thermique ambiante et de réchauffage. Le moteur est équipé d'un dispositif de récupération d'énergie thermique ambiante où la détente avec travail de l'air comprimé haute pression stocké dans le réservoir 23 est réalisé dans un ensemble bielle 53 et piston de travail 54 attelé directement à un vilebrequin 18C relié au vilebrequin moteur 18 par une transmission 21A. Ce piston 54 coulisse dans un cylindre borgne 55 et détermine une chambre de travail 35 dans laquelle débouche d'une part un conduit d'admission d'air haute pression 37 dont l'ouverture et ia fermeture sont commandées par une électrovanne 38, et d'autre part un conduit d'échappement 39 relié à un échangeur thermique air air ou radiateur 41 lui-même relié par un conduit 42 à une capacité tampon à pression finale d'utilisation quasi constante 43. Lors du fonctionnement lorsque le piston de travail 54 est à son point mort haut, l'électrovanne 38 est ouverte puis refermée afin d'admettre une charge d'air comprimé très haute pression qui va se détendre en repoussant le piston 54 jusqu'à son point mort bas. fournir un travail, et entraîner par l'intermédiaire de la bielle 53 le vilebrequin 18C et à travers la transmission 21A le vilebrequin moteur 18. Lors de la course de remontée du piston 54, l'électrovanne d'échappement 40 est alors ouverte et l'air comprimé sensiblement détendu à pression d'utilisation, et à très basse température contenu dans la chambre de travail est refoulé (selon le sens de la flèche F) dans l'échangeur air air ou radiateur 41. Cet air va ainsi se réchauffer jusqu'à une température proche de l'ambiante et augmenter de volume en rejoignant la capacité tampon 43 en avant récupéré une quantité d'énergie non négligeable dans l'atmosphère

Entre l'échangeur air air 41 et la capacité tampon 43, sur le conduit 42 est également implanté un réchauffeur thermique 56, constitué de brûleurs 57 qui vont augmenter considérablement la température et donc la pression et/ou le volume de l'air comprimé en provenance (selon le sens des flèches F) de l'échangeur air air 41 lors de son passage dans le serpentin d'échange 58.

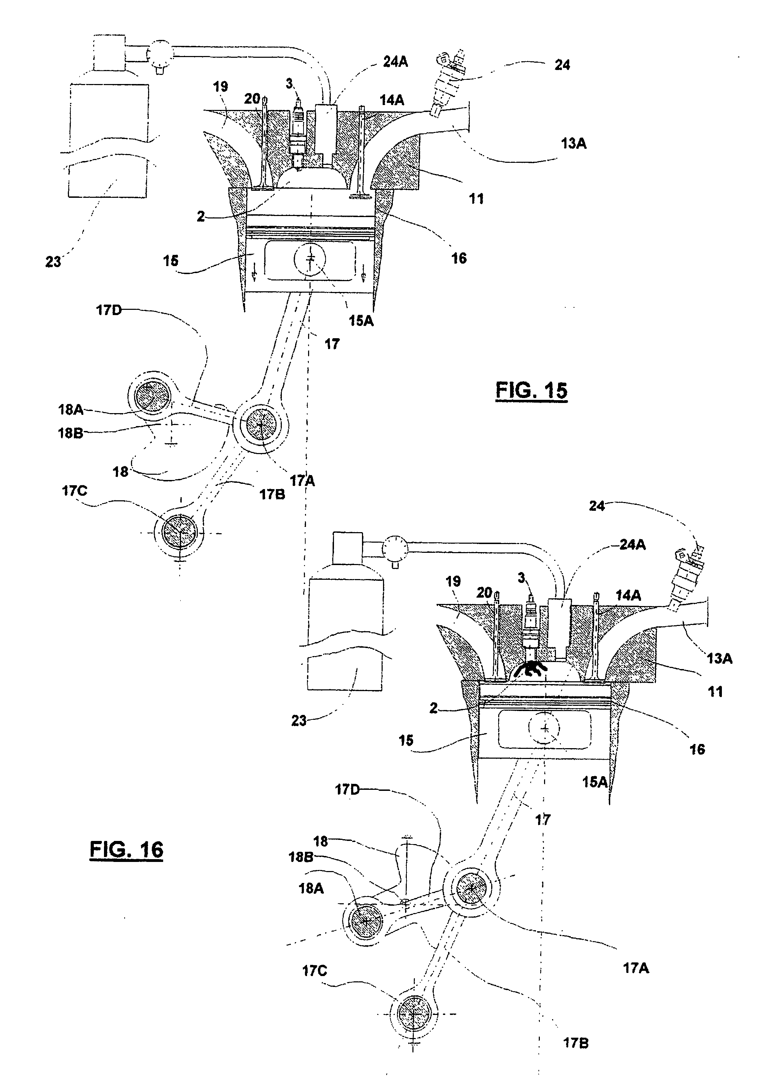

Les figures 15 à 18 représentent le moteur selon un autre aspect de l'invention vu schématiquement en coupe transversale modifié pour fonctionner selon l'invention suivant un principe bi-modes à deux types d'énergie, utilisant soit un carburant conventionnel tel essence ou gasoil sur route (fonctionnement mono-mode à air-carburant), soit, à basse vitesse, notamment en zone urbaine et suburbaine, une addition d'air comprimé dans la chambre de combustion, le piston 15, coulissant dans un cylindre 16, est commandé par un levier à pression de fonctionnement et de description identique à la figure 1.

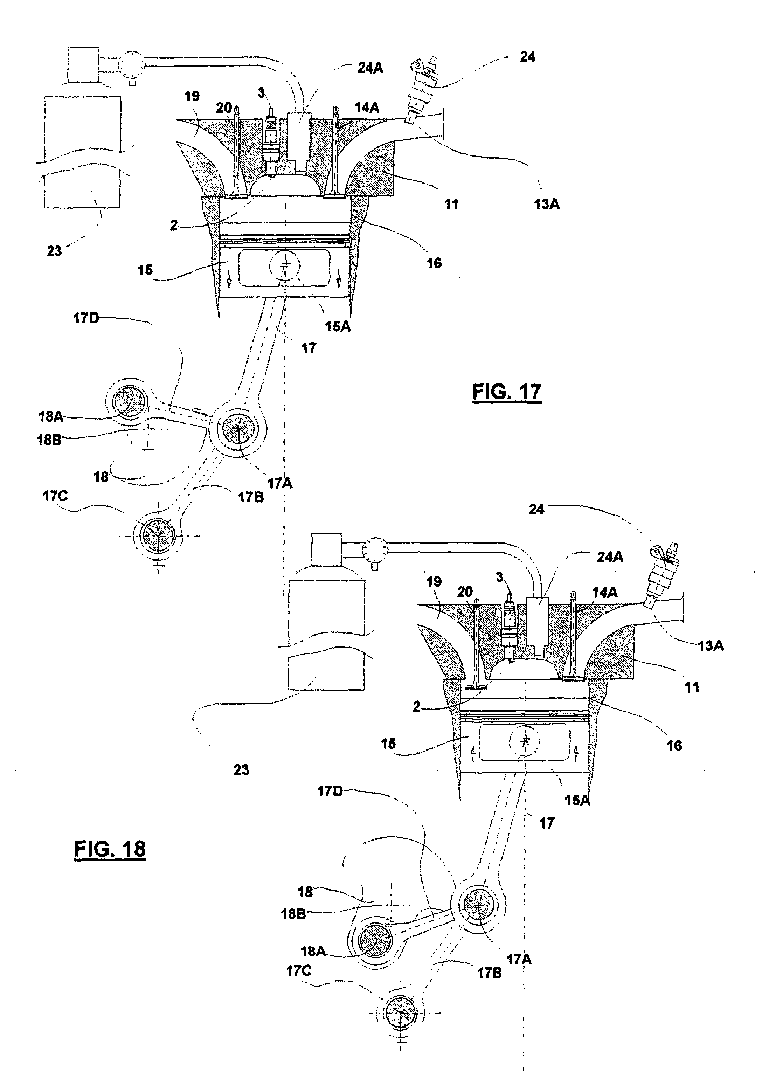

Sur cet ensemble de piston bielles et manivelle est positionné une culasse 11 comportant d'une part un orifice d'échappement 19 dont l'ouverture et la fermeture sont assurées par une soupape d'échappement 20, la chambre de combustion jumelée 2 et d'autre part, un orifice d'admission 13A dont l'ouverture et la fermeture sont commandées par une soupape 14A. Lorsque le moteur fonctionne en mode air plus air comprimé additionnel, la soupape d'admission 13A n'est pas commandée et reste en position fermée, le moteur fonctionne alors tel que décrit sur les figures 11 à 13, au-delà d'une certaine vitesse par exemple 60 km/h au passage en mode thermique avec un mélange air carburant le cycle d'ouverture et de fermeture de la soupape d'échappement 20 est modifié pour venir s'ouvrir durant la course ascendante du piston seulement tous les deux tours moteurs alors que la soupape d'admission 13A est commandée pour s'ouvrir également tous les deux tours durant la course descendante du piston 15, le moteur peut alors changer de mode et de cycle, lors de la course descendante du piston 15, figure 15, la soupape d'admission 13A est ouverte et le piston aspire un mélange d'air et d'essence délivré par l'injecteur 24, ce mélange est ensuite comprimé lors de la course ascendante du piston 15, figure 16, dans la chambre de combustion 2 où il est enflammé lors de l'allumage déclenché par la bougie 3, puis détendu en repoussant le piston 15 durant le temps moteur, figure 17 jusqu'au point mort bas où la soupape d'échappement 20 est ouverte et le mélange est ensuite évacué à l'atmosphère à travers le conduit d'échappement 19 lors de la remontée du piston 15, figure 18. Lorsque le piston est à son point mort haut, la soupape d'admission 13A s'ouvre pour recommencer un nouveau cycle (idem figure 15). Le moteur fonctionne ainsi suivant un cycle à quatre temps classique.

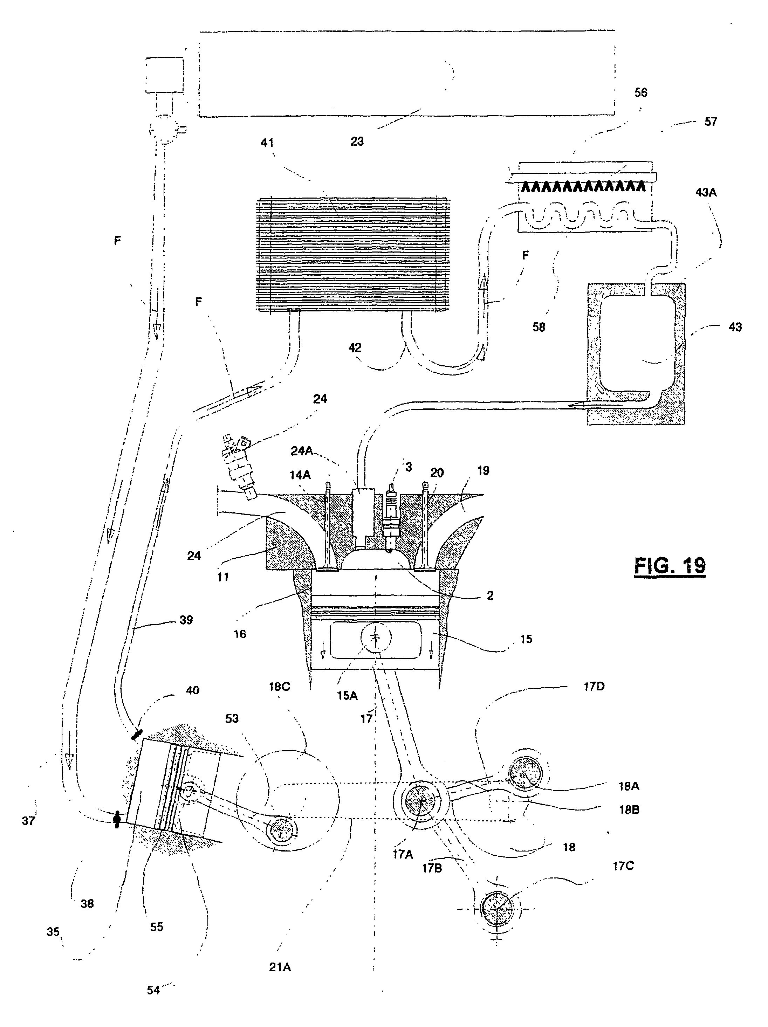

La figure 19 représente un ensemble de moteur bi-énergie tri mode selon l'invention pouvant fonctionner soit en air plus air comprimé additionnel sous de faibles charges, soit en air comprimé plus air comprimé additionnel réchauffé par un réchauffeur thermique, les deux modes ci-dessus selon un cycle à un temps moteur par tour, soit encore en thermique air plus carburant à combustion interne à un temps moteur tous les deux tours. Il est possible de voir dans cette figure tous les éléments compatibles avec un tel fonctionnement soit un piston 15 coulissant dans un cylindre 16 commandé par un levier à pression de fonctionnement et de description identiques à la figure 1.

Sur cet ensemble de piston bielles et manivelle est positionné une culasse 11 comportant d'une part un orifice d'échappement 19 dont l'ouverture et la fermeture sont assurées par une soupape d'échappement 20, la chambre de combustion jumelée 2 et d'autre part, un orifice d'admission 13A dont l'ouverture et la fermeture sont commandées par une soupape 14A Le moteur est équipé d'un dispositif de récupération d'énergie thermique ambiante ou la détente, avec travail de l'air comprimé haute pression stocké dans le réservoir 23, est réalisée dans un ensemble bielle 53 et piston de travail 54 attelé directement à un vilebrequin 18C relié au vilebrequin moteur 18 par une transmission 21A. Ce piston 54 coulisse dans un cylindre borgne 55 et détermine une chambre de travail 35 dans laquelle débouche d'une part un conduit d'admission d'air haute pression 37 dont l'ouverture et la fermeture sont commandées par une électrovanne 38, et d'autre part un conduit d'échappement 39 relié à l'échangeur thermique air air ou radiateur 41 lui-même relié par un conduit 42 à une capacité tampon à pression finale d'utilisation quasi constante 43. Lors du fonctionnement lorsque le piston de travail 54 est à son point mort haut, l'électrovanne 38 est ouverte puis refermée afin d'admettre une charge d'air comprimé très haute pression qui va se détendre en repoussant le piston 54 jusqu'à son point mort bas et entraîner par l'intermédiaire de la bielle 53 le vilebrequin 18C et à travers la transmission 21A le vilebrequin moteur 18. Lors de la course de remontée du piston 54. l'électrovanne d'échappement 40 est alors ouverte et l'air comprimé mais détendu et à très basse température contenu dans la chambre de travail est refoulé (selon le sens de la flèche F) dans l'échangeur air air ou radiateur 41. Cet air va ainsi se réchauffer jusqu'à une température proche de l'ambiante et augmenter de volume en rejoignant la capacité tampon 43 en ayant récupéré une quantité d'énergie non négligeable dans l'atmosphère.

Entre l'échangeur air air 41 et la capacité tampon 43, sur le conduit 42A est également implanté un réchauffeur thermique 56, constitué de brûleurs 57 qui vont augmenter considérablement la température et donc la pression et/ou le volume de l'air comprimé en provenance (selon le sens des flèches F) de l'échangeur air air 41 lors de son passage dans le serpentin d'échange 58.

D'autre part dans cette culasse 11 a été également ménagé un orifice d'admission 13A dont l'ouverture et la fermeture sont commandées par une soupape 14A. Lorsque le moteur fonctionne en mode air plus air comprimé additionnel, la soupape d'admission 13A n'est pas commandée et reste en position fermée, le moteur fonctionne alors tel que décrit sur les figures 11 à 13, le dispositif de récupération d'énergie thermique ambiante fonctionne préférentiellement avec ce mode. Au-delà d'une certaine vitesse par exemple 50 km/h le dispositif de réchauffage peut être mis en action par l'allumage des brûleurs 57 afin de permettre une augmentation des performances tout en restant en pollution très faible du fait de la combustion catalysée continue, et ensuite au-delà d'une vitesse plus rapide, par exemple 70 km/h, l'injecteur d'air comprimé additionnel 24A n'est plus actionné, le brûleur 57 est éteint et on effectue un passage en mode thermique -combustion interne- avec un mélange air carburant le cycle d'ouverture et de fermeture de la soupape d'échappement 20 est modifié pour venir s'ouvrir durant la course ascendante du piston seulement tous les deux tours moteur alors que la soupape d'admission 13A est commandée pour s'ouvrir égarement tous les deux tours durant la course descendante du piston 15, le moteur peut alors changer de cycle, lors de la course descendante du piston 15, figure 15 la soupape d'admission 13A est ouverte et le piston aspire un mélange d'air et d'essence ce mélange est ensuite comprimé lors de la course ascendante du piston 15 figure 16, dans la chambre de combustion 2 où il est enflammé lors de l'allumage déclenché par la bougie 3, puis détendu en repoussant le piston 15 durant le temps moteur figure 17 jusqu'au point mort bas où la soupape d'échappement 20 est ouverte et le mélange est ensuite évacué à l'atmosphère a travers le conduit d'échappement 19 lors de la remontée du piston 15 figure 18. La soupape d'admission s'ouvre ensuite pour recommencer un nouveau cycle idem figure 15. Le moteur fonctionne ainsi suivant un cycle à quatre temps classique.

Bien entendu, l'invention n'est nullement limitée aux modes de réalisations décrits et représentés ; elle est susceptible de nombreuses variantes accessibles à l'homme de l'art, suivant les applications envisagées et sans que l'on ne s'écarte de l'esprit de l'invention.

## Revendications

1. Procédé de fonctionnement de moteur à chambre d'aspiration-compression, à chambre de détente-échappement fonctionnant toutes deux à l'aide de pistons alternatifs et à chambre de combustion, les trois chambres étant séparées, **caractérisé en ce qu'**il est prévu, au moins sur la chambre de détente-échappement, un dispositif de contrôle de la course du piston de ladite chambre provoquant l'arrêt de ce damier à son point mort haut, et **en ce que** la chambre de combustion est montée jumelée sans obturateur sur la partie haute du cylindre de détente-échappement, le piston séparant sensiblement la chambre de combustion de la chambre de détente-échappement à son point mort haut.

2. Procédé de fonctionnement de moteur selon la revendication 1, **caractérisé en ce que** le cycle de fonctionnement de la chambre aspiration-compression est décalé en retard par rapport au cycle de la chambre détente-échappement pour que le piston de cette dernière, arrivant à son point mort haut, se trouve en avance par rapport au point mort haut du piston de la chambre aspiration compression, et reste à son point mort haut pendant les opérations suivantes :
- la mise en communication de la chambre de combustion et de la chambre d'aspiration compression,
- le remplissage de ladite chambre de combustion avec le mélange air-carburant comprimé par le piston de la chambre d'aspiration-compression arrivant à son point mort haut,
- la fermeture de la communication entre la chambre de combustion et la chambre d'aspiration-compression,
- l'allumage et la combustion du mélange qui génère une augmentation de pression,
puis, dès le début de sa course descendante, produit un travail provoqué par l'augmentation de pression.

3. Procédé de fonctionnement de moteur selon les revendications 1 et 2, **caractérisé en ce que** le moteur fonctionne avec des mélanges hétérogènes à auto inflammation, dans lequel un injecteur de carburant est actionné pour provoquer la combustion dès que la chambre de combustion est isolée de la chambre d'aspiration -compression.

4. Procédé de fonctionnement de moteur selon les revendications 1 à 3, **caractérisé en ce que** la chambre de combustion est une portion de sphère jumelée à la chambre de détente et d'échappement.

5. Procédé de fonctionnement de moteur selon l'une quelconque des revendications 1 à 4, **caractérisé en ce qu'**au moins l'une des chambres de combustion et de détente est revêtue d'une barrière thermique en matériaux isolants calorifuge.

6. Procédé de fonctionnement de moteur selon l'une quelconque des revendications 1 à 5, **caractérisé en ce que** entre la chambre d'aspiration-compression des gaz frais, et la chambre de combustion indépendante jumelée, est implantée une capacité tampon des gaz alors comprimés pour éviter des effets de pompage ainsi que des pertes de pression dûs au volume mort de transfert entre les chambres, et à la détente partielle des gaz lors du remplissage de la chambre de combustion, un conduit de liaison et son système d'ouverture et de fermeture commandé se trouvant alors entre la capacité tampon et la chambre de combustion.

7. Procédé de fonctionnement de moteur, selon l'une quelconque des revendications 1 à 6, en utilisation bi-energie et bi-mode, **caractérisé en ce que** lors d'un fonctionnement à faible puissance, par exemple en circulation urbaine, la chambre d'aspiration-compression n'est plus alimentée en carburant, et **en ce que** l'on introduit dans la chambre de combustion, sensiblement après l'admission dans cette dernière d'air comprimé -sans carburant- provenant de la chambre d'aspiration-compression, une dose d'air comprimé additionnel provenant d'un réservoir externe où l'air est stocké sous haute pression initiale, par exemple 200 bars et à température ambiante, cette dose d'air comprimé additionnel à température ambiante venant au contact de la masse d'air à haute température contenue dans la chambre de combustion qui devient dans ce cas une chambre d'expansion, s'échauffer, se dilater et augmenter la pression régnant dans la chambre de combustion pour permettre de délivrer lors de la détente un travail moteur et **en ce que** lors d'un fonctionnement à puissance élevée, par exemple sur route, le moteur est alimenté en carburant et fonctionne selon l'une quelconque des revendications 1 à 6.

8. Procédé de fonctionnement de moteur selon l'une quelconque des revendications 1 à 6 en utilisation mono-énergie et mono-mode air plus air comprime additionnel, **caractérisé en ce que** tous les éléments nécessaires à l'alimentation du moteur avec un carburant classique sont supprimés, et **en ce que** l'on introduit dans la chambre de combustion, sensiblement après l'admission dans cette dernière d'air comprimé -sans carburant- provenant de la chambre d'aspiration-compression, une dose d'air comprimé additionnel provenant d'un réservoir externe où l'air est stocké sous haute pression initiale, par exemple 200 bars et à température ambiante, cette dose d'air comprimé additionnel à température ambiante venant, au contact de la masse d'air à haute température contenue dans la chambre de combustion qui devient dans ce cas une chambre d'expansion, s'échauffer, se dilater et augmenter la pression régnant dans la chambre de combustion pour permettre de délivrer lors de la détente un travail moteur.

9. Procédé de fonctionnement de moteur mono-mode à air comprimé, comportant une chambre de détente-échappement fonctionnant à l'aide d'un piston coulissant dans un cylindre, et pourvue d'un orifice d'échappement et d'une chambre d'expansion indépendante jumelée, **caractérisé en ce que** la chambre de détente-échappement est équipée d'un dispositif de contrôle de la course du piston provoquant l'arrêt de ce dernier à son point mort haut, dans lequel le cylindre d'aspiration-compression à été supprimé et, **en ce que**, lors de la course ascendante du piston de la chambre détente-échappement, pendant le cycle d'échappement, l'orifice d'échappement est obturé pour permettre qu'une partie des gaz précédemment détendus soient recomprimés à une température et une pression élevée dans la chambre d'expansion dans laquelle, durant l'arrêt du piston à son point mort haut, est injectée une dose d'air comprimé additionnel provenant d'un réservoir de stockage, provoquant ainsi dans la chambre d'expansion une augmentation de pression qui produit un travail en repoussant le piston dans sa course descendante.

10. Procédé de fonctionnement de moteur selon l'une quelconque des revendications 7 à 9, **caractérisé en ce que**, avant son introduction dans la chambre d'expansion, l'air comprimé contenu dans le réservoir de stockage haute pression est détendu avec un travail produisant un abaissement de sa température, puis, est envoyé dans un échangeur avec de l'air ambiant pour se réchauffer et augmenter ainsi sa pression et/ou son volume en récupérant de l'énergie thermique ambiante.

11. Procédé de fonctionnement de moteur selon l'une quelconque des revendications 7 à 10, **caractérisé en ce que**, avant son introduction dans la chambre de d'expansion, l'air comprimé provenant du réservoir de stockage est canalisé, soit directement soit après son passage dans l'échangeur thermique air air, dans un réchauffeur thermique pour augmenter davantage sa pression et/ou son volume.

12. Procédé de fonctionnement de moteur selon la revendication 9, en utilisation bi-énergie, **caractérisé en ce que** le cycle d'ouverture et de fermeture de la soupape d'échappement qui s'ouvre à chaque cycle moteur sur une partie de la course ascendante du piston varie en cours de fonctionnement pour s'ouvrir durant la course ascendante du piston tous les deux tours, et **en ce que**, le moteur est équipé d'une admission d'air et de carburant introduisant dans le cylindre une charge de mélange carburé qui est aspiré durant la course de descente du piston puis comprimé dans la chambre d'expansion jumelée, qui devient alors une chambre de combustion, dans laquelle le mélange est brûlé puis détendu en produisant un travail en repoussant le piston et refoulé ensuite à l'échappement selon le cycle classique d'un moteur à 4 temps.

13. Procédé de fonctionnement de moteur selon l'une quelconque des revendications 1 à 11, en utilisation tri-mode, **caractérisé en ce que** le moteur fonctionne soit avec de l'air comprimé sans réchauffage avec une pollution zéro, soit avec de l'air comprimé réchauffé par une combustion externe dans un réchauffeur thermique alimenté par un carburant traditionnel avec une pollution quasi nulle, soit avec une combustion interne par admission d'air et de carburant permettant d'introduire une charge de mélange carburé dans la chambre d'expansion, dans laquelle le mélange est brûlé puis détendu en produisant un travail et refoulé à l'échappement selon le cycle classique d'un moteur à 4 temps réalisant ainsi un fonctionnement tri-mode.

14. Procédé de fonctionnement de moteur en utilisation tri-mode selon la revendication 13 **caractérisé en ce que** les trois modes de fonctionnement décrit ci-dessus air plus air comprimé additionnel, air plus air comprimé additionnel réchauffé par un brûleur, air plus carburant peuvent être utilisés séparément ou en combinaison.

15. Procédé de fonctionnement de moteur selon l'une quelconque des revendications 7 à 13 **caractérisé en ce que** l'air aspiré par le moteur est filtré et purifié à travers un ou plusieurs filtrages choisis parmi les procédés à charbon actif, les procédés mécaniques, chimiques, et tamis moléculaire afin de réaliser un moteur dépolluant.

16. Dispositif de moteur pour la mise en oeuvre du procédé selon l'une des revendications 1 et 2, **caractérisé en ce qu'**il comporte une chambre de combustion (2) qui est jumelée avec la chambre de détente (4) qui comporte elle-même un piston (15) commandé par un dispositif de contrôle de la course du piston, - provoquant l'arrêt du piston à son point mort haut durant une période de rotation angulaire pouvant aller jusqu'à 150 degrés, et constitué d'un levier à pression (17,17A,17B,17C) lui-même commandé par une bielle (17D) reliée au maneton (18A) d'un vilebrequin moteur (18) tournant sur son axe (18B) et entraînant, par un vilebrequin de compresseur (12) et une bielle (11), un piston d'aspiration compression (9) dans une chambre de compression (1) reliée à la chambre de combustion (2) par un conduit (5) dont l'ouverture et la fermeture sont commandées par un volet étanche (6), et **caractérisé en ce que** le vilebrequin (12) de la chambre d'aspiration-compression est entraîné à travers une liaison mécanique (21) par le vilebrequin moteur (18) et calé en retard dans le cycle pour que le piston de détente échappement (15) arrive et reste à son point mort haut pendant :
- l'ouverture du volet (6),
- le remplissage de la chambre de combustion du mélange compnmé par le piston de compression (9) arrivant à son point mort haut,
- ia fermeture du volet (6)
- l'allumage par la bougie (3)
- et la combustion qui va générer une augmentation de pression dans la chambre (2) et repousser le piston de détente (15) en produisant un travail dit temps moteur.

17. Dispositif de moteur pour la mise en oeuvre du procédé selon la revendication 3 **caractérisé en ce qu'**il comporte une chambre de combustion (2) qui est jumelée avec la chambre de détente (4) qui comporte un piston (15) commandé par un dispositif de contrôle de la course du piston, - provoquant l'arrêt du piston à son point mort haut durant une longue période de rotation angulaire - constitué d'un levier à pression (17,17A,17B,17C) lui-même commandé par une bielle (17D) reliée au maneton (18A) d'un vilebrequin moteur (18) tournant sur son axe (18B) et entraînant, par un vilebrequin de compresseur (12) et une bielle (11), un piston d'aspiration compression (9) dans une chambre de compression (1) reliée à la chambre de combustion (2) par un conduit (5) dont l'ouverture et la fermeture sont commandées par un volet étanche (6), **en ce que** une capacité tampon (22) est disposée entre un compresseur qui est relié à cette dernière par un conduit (23), **en ce qu'**un papillon d'accélération (25) est interposé entre cette capacité tampon et le conduit (5) comportant un injecteur de carburant (24) et **en ce que** dès que le piston (15) arrive à son point mort haut, et durant son arrêt dans cette position, le volet (6) est ouvert et l'injecteur de carburant (24) est actionné pour introduire dans la chambre (2) une charge de mélange comprimé, puis le volet se referme et l'allumage est commandé par une bougie (3) pour provoquer la combustion qui va générer une augmentation de pression dans la chambre (2) et repousser le piston de détente (15) en produisant un travail dit temps moteur.

18. Dispositif de moteur pour la mise en oeuvre du procédé selon la revendication 7, **caractérisé en ce que** la chambre de combustion (2) reçoit un injecteur d'air comprimé additionnel (24A) alimenté par un réservoir de stockage haute pression (23) qui injecte lors du fonctionnement aux faibles puissances, une dose d'air comprimé additionnel alors que l'injecteur de carburant (24) n'a pas été actionné, et provoque dans la chambre de combustion (2) une augmentation de pression qui produit un travail en se détendant durant la course descendante du piston.

19. Dispositif de moteur pour la mise en oeuvre du procédé selon la revendication 9, **caractérisé en ce que** la chambre d'expansion (2) est jumelée avec la chambre de détente (4) qui comporte un piston (15) commandé par un dispositif de contrôle de la course du piston, - provoquant l'arrêt du piston à son point mort haut durant une longue période de rotation angulaire - constitué d'un levier à pression (17,17A,17B,17C) lui-même commandé par une bielle (17D) reliée au maneton (18A) d'un vilebrequin moteur (18) tournant sur son axe (18B), ladite chambre de combustion étant alimentée par un injecteur (24A) en air comprimé additionnel provenant d'un réservoir haute pression (23), et **en ce que** la soupape d'échappement (20) obturant le conduit d'échappement (19) est commandée pour s'ouvrir sensiblement du point mort bas du piston et se refermer pendant la course ascendante dudit piston (15) pour recomprimer dans la chambre d'expansion (2) le solde de gaz restant produisant une boule chaude d'air comprimé dans laquelle est injecté, dès l'arrêt du piston à son point mort haut une nouvelle dose d'air comprimé additionnel qui provoque l'augmentation de la pression dans ladite chambre et produit un travail lors de la détente dès le début de la course descendante du piston (15).

20. Dispositif de moteur pour la mise en oeuvre du procédé selon la revendication 10 à 14, **caractérisé en ce que** entre le réservoir de stockage (23) et l'injecteur d'air comprimé additionnel (24A) est disposé un piston (54), attelé directement sur l'arbre moteur (18), et qui coulisse dans un cylindre borgne (55) formant une chambre de travail (35) dans laquelle débouche, d'une part, un conduit d'admission d'air haute pression (37) dont l'ouverture et la fermeture sont commandées par une électrovanne (38), et, d'autre part, un conduit d'échappement (39) relié à l'échangeur thermique air air ou radiateur (41) lui-même relié par un conduit (42) à une capacité tampon à pression finale d'utilisation quasi constante (43) et **en ce que** l'air comprimé très haute pression se détend en repoussant le piston en produisant un travail avec un abaissement de la température puis est refoulé (F), vers l'échangeur air air (41) pour se réchauffer et augmenter de pression et/ou de volume.

21. Dispositif de moteur pour la mise en oeuvre du procédé selon la revendication 10 à 14, **caractérisé en ce que** entre le réservoir de stockage haute pression (23) et l'injecteur d'air comprimé additionnel (24A) est disposé un réchauffeur thermique (56), constitué de brûleurs (57) qui augmentent la température et donc la pression et/ou le volume de l'air comprimé en provenance (F) du réservoir haute pression (23), lors de son passage dans le serpentin d'échange (58).

22. Dispositif de moteur selon la revendication 21, **caractérisé en ce que** l'air comprimé provenant du réservoir haute pression (23) traverse un échangeur air air selon la revendication 20.

23. Dispositif de moteur pour la mise en oeuvre du procédé selon les revendications 13 et 14, **caractérisé en ce que** le dispositif de contrôle de la course du piston, - provoquant l'arrêt du piston à son point mort haut durant une longue période de rotation angulaire - est constitué d'un levier à pression (17,17A,17B,17C) lui-même commandé par une bielle (17D) reliée au maneton (18A) d'un vilebrequin (18) tournant sur son axe (18B) coulisse dans un cylindre (16) coiffé d'une culasse (11) comportant une chambre de combustion jumelée (2) dans laquelle débouche d'une part un conduit d'admission comportant lui-même un injecteur de carburant (24) dont l'ouverture et la fermeture sont commandées par une soupape (14A) et d'autre part un conduit d'échappement (19) dont l'ouverture et la fermeture sont commandées par une soupape (20) qui peut selon le mode de fonctionnement s'ouvrir soit tous les deux tours moteurs pendant la course ascendante du piston soit tous les tours durant une partie seulement de la course ascendante du piston, ainsi qu'une bougie d'allumage (3) et un injecteur d'air comprimé additionnel (24A) alimenté en air comprimé par un réservoir de stockage d'air comprimé haute pression (23) , cet ensemble permettant de faire fonctionner le moteur selon deux modes soit alimenté en air comprimé additionnel pour de faibles puissances, soit alimenté en charge carburée avec un carburant traditionnel pour des puissances plus élevées.

## Patentansprüche

1. Betrieb eines Motors mit Ansaug-Verdichfcungskammer, mit Entspannungs-Luftaustrittskammer, die beide mit Hubkolben sowie Verbrennungskammer funktionieren. Die drei Kammern sind getrennt und in bezug auf die Entspannungs-Luftaustrittskammer mit einer Kontrollvorrichtung des Kolbenwegs ausgestattet, welche den Halt des Kolbens an seinem oberen Todpunkt hervorruft. Die Verbrennungskammer ist gekoppelt, ohne Abdeckung auf den oberen Teil des Zylinders der Entspannungs-Luftaustrittskammer montiert, somit trennt der Kolben die Verbrennungskammer leicht von der Entspannungs-Luftaustrittskammer an seinem Todpunkt.

2. Betrieb eines Motors gemäss Patentanspruch 1, **gekennzeichnet durch** die Tatsache, dass der Betriebszyklus der Ansaug-Verdichtungskammer im Vergleich zum Zyklus der Entspannungs-Luftaustrittskammer verzögert ist, damit der Kolben dieser Kammer früher seinem Todpunkt erreicht als der Kolben der Ansaug-Verbrennungskammer und während folgender Operationen an seinem Todpunkt bleibt:
- In Kommunikationsbringen der Verbrennungsund der Ansaug-Entspannungskammern
- Füllen der Verbrennungskammer mit dem **durch** den Kolben der Ansaug-Verdichtungskammer an seinem oberen Todpunkt verdichtetem Kraftstoff-Luftgemisch,
- Schließen der Kommunikation zwischen Verbrennungskammer und Ansaug-Verdichtungskammer
- Zünden und Verbrennen der Mischung, wodurch ein Druckanstieg hervorgerufen wird Dann, zu Beginn seines Abstiegs, wird eine **durch** den Druckanstieg hervorgerufener Betrieb erzeugt.

3. Betrieb des Motors gemäss Patentanspruch 1 und 2, **gekennzeichnet durch** die Tatsache, dass der Motor mit heterogenen selbstzündenden Mischungen **durch** Betreiben einer Einspritzdüse funktioniert, um die Verbrennung hervorzurufen, sobald die Verbrennungskammer von der Ansaug-Verdichtungskammer getrennt ist.

4. Betrieb eines Motors gemäss Patentanspruch 1 bis 3, **gekennzeichnet durch** die Tatsache, dass die Verbrennungskammer Portion eines Kreises ist, welche mit der Entspannungs-Luftaustrittskammer verbunden ist.

5. Betrieb eines Motors gemäss einer der Patentansprüche 1 bis 4, **gekennzeichnet durch** die Tatsache, dass mindestens eine der Verbrennungskammern und Entspannungskammern mit einer Thermoschranke aus hitzebeständigem, isolierendem Material ausgestattet ist.

6. Betrieb eines Motors gemäss einer der Patentansprüche 1 bis 5, **gekennzeichnet durch** die Tatsache, dass zwischen der Ansaug-Verdichtungskammer der frischen Gase und der gekoppelten unabhängigen Verbrennungskammer eine Gaspuffer-Vorrichtung der verdichteten Gase eingebaut ist, um Pumpeffekte und Druckverluste aufgrund des toten Übertragungsvolumen zwischen den Kammern und der teilweisen Entspannung des Gase bei Füllen der Verbrennungskammer zu vermeiden, eine Verbindungsleitung mit gesteuertem Öffnungs- und Verschließsystem wurde hierzu zwischen der Pufferkapazität und der Verbrennungskammer eingebaut.

7. Betrieb eines Motors gemäss einer der Patentansprüche 1 bis 6 mit Bi-Energie oder Bi-Modus funktionierend, **gekennzeichnet durch** die Tatsache, dass bei Betrieb mit geringer Leistung, z. B. bei Stadtverkehr, die Ansaug-Verdichtungskammer nicht mehr mit Kraftstoff versorgt wird und in die Ansaug-Verdichtungskammer kurz nach Einfüllen von Druckluft - ohne Kraftstoff - aus der Ansaug-Verdichtungskammer, eine Dosis zusätzlicher Druckluft aus einem externen Tank, in welchem die Luft unter Hochdruck, z. B. 200 Bars, bei Umgebungstemperatur gelagert wird. Sobald diese Dosis Druckluft bei Umgebungstemperatur in Kontakt mit der heißen Luftmasse in der Verbrennungskammer kommt, wird diese zu einer Expansionskammer, erhitzt sich, dehnt sich und erhöht den Druck der Verbrennungskammer, um bei Entspannung den Betrieb des Motors auszulösen. Bei Betrieb bei Hochleistung, z. B. Landverkehr, wird der Motor mit Kraftstoff gespeist und funktioniert gemäss einem der Patentansprüche 1 bis 6.

8. Betrieb eines Motors gemäss einer der Patentansprüche 1 bis 6, mit Mono-Energie oder Mono-Modus Luft plus zusätzlicher Druckluft funktionierend, **gekennzeichnet durch** die Tatsache, dass alle zur Speisung des Motors mit herkömmlichem Kraftstoff notwendigen Elemente entfernt wurden und in die Verbrennungskammer kurz nach Füllen dieser mit Druckluft - ohne Kraftstoff - aus der Ansaug-Verdichtungskammer, eine Dosis zusätzlicher Druckluft aus einem externen Tank, in welchem die Luft unter Hochdruck, z. B. 200 Bars, bei Umgebungstemperatur gelagert wird. Sobald diese Dosis Druckluft bei Umgebungstemperatur in Kontakt mit der heißen Luftmasse in der Verbrennungskammer kommt, wird diese zu einer Expansionskammer, erhitzt sich, dehnt sich und erhöht den Druck der Verbrennungskammer, um bei Entspannung den Betrieb des Motors auszulösen.

9. Betrieb eines Mono-Modus-Druckluftmotors bestehend aus einer Entspannungs-Luftaustrittskammer, die mit einem Schiebekolben in einem Zylinder funktioniert und mit einer Austrittsöffnung und einer gekoppelten unabhängigen Expansionskammer ausgerüstet ist, **gekennzeichnet durch** die Tatsache, dass die Entspannungs-Austrittskammer mit einer Kontrollvorrichtung des Kolbenwegs ausgestattet ist, der diesen an seinem oberen Todpunkt, in welchem der Ansaug-Verdichtungszylinder entfernt wurde, anhält, und dass bei absteigendem Lauf des Kolbens der Entspannungs-Austrittskammer, während des Austrittszyklus, die Luftaustrittsöffnung verschlossen wird, damit ein Teil der vorher entspannten Gase bei hoher Temperatur und hohem Druck in der Expansionskammer erneut verdichtet werden können, in welcher Kammer während des Halts des Kolbens auf seinem oberen Todpunkt, eine zusätzliche Dosis Druckluft injiziert wird, so dass in der Expansionskammer ein Druckanstieg hervorgerufen wird, der den Motorbetrieb auslöst, indem der Kolben in absteigender Richtung zurückgepresst wird.

10. Betrieb eines Motors gemäss einem der Patentansprüche von 7 - 9 **gekennzeichnet durch** die Tatsache, dass vor Einführen in die Expansionskammer, die in einem externen Hochdrucktank gelagerte Druckluft entspannt wird, indem ihre Temperatur gesenkt wird, und dann in einen Kühler bei Umgebungstemperatur gelenkt wird, um sich wieder zu erwärmen und somit ihren Druck und/oder Volumen zu erhöhen, indem die thermische Umgebungsenergie aufgefangen wird.

11. Betrieb eines Motors gemäss einem der Patentansprüche von 7 bis 10, **gekennzeichnet durch** die Tatsache, dass vor Einführen in die Expansionskammer die aus dem Tank kommende Druckluft entweder direkt oder nach ihrem Durchgang im Thermokühler Luft-Luft in eine thermische Aufwärmvorrichtung gelenkt wird, um ihren Druck und/oder ihr Volumen zu erhöhen.

12. Betrieb eines Motors gemäss Patentanspruch 9, mit Bi-Energie funktionierend, **gekennzeichnet durch** die Tatsache, dass der Öffnungs- und Schließzyklus des Austrittsventils, das bei jedem Motorzyklus auf einem Teil des Abstiegwegs des Kolbens öffnet, während des Betriebs variiert, um sich alle zwei Umdrehungen während des Abstiegwegs des Kolbens öffner, und **dadurch**, dass der Motor mit einer Luft- und Kraftstoffzuführung ausgestattet ist, die in den Zylinder eine Ladung Kraftstoffmischung hinzufügt, die während des Abstiegwegs des Kolbens angesaugt, dann in der gekoppelten Expansionskammer verdichtet wird, die nun zu einer Verbrennungskammer wird, in welcher die Mischung verbrannt und dann entspannt wird, und somit einen Motorbetrieb **durch** Zurückschieben des Kolbens und Rückführung zum Austritt gemäss des herkömmlichen Zyklus einer 4-Takt-Motors hervorruft.

13. Betrieb eines Motors gemäss einem der Patenansprüche 1 bis 11, in Tri-Modus funktionierend, **gekennzeichnet durch** die Tatsache, dass der Motor entweder mit Druckluft ohne Aufwärmen bei Null Verschmutzung, oder mit aufgewärmter Druckluft **durch** externe Verbrennung in einem, mit herkömmlichem Kraftstoff gespeisten thermischen Wärmer bei quasi Null Verschmutzung, oder aber mit interner Verbrennung **durch** Zuführung von Gas und Kraftstoff funktioniert, womit eine Masse an Kraftstoffmischung in die Expansionskammer eingeführt wird, in welcher die Mischung verbrannt und verdichtet wird und somit einen Betrieb gemäss eines herkömmlichen Zyklus eines 4-Takt-Motors und somit einen Tri-Modus-Betrieb auslöst.

14. Betrieb eines Motors durch Verwendung des Tri-Modus gemäss Patentanspruch 13, **gekennzeichnet durch** die Tatsache, dass die drei oben beschriebenen Betriebsmodi Luft plus zusätzlicher Druckluft, Luft plus **durch** einen Brenner aufgewärmte zusätzliche Druckluft, Luft plus Kraftstoff, getrennt oder kombiniert verwendet werden können.

15. Betrieb eines Motors gemäss einer der Patentansprüche 6 bis 13, **gekennzeichnet durch** die Tatsache, dass die **durch** den Motor angesaugte Luft **durch** eine oder mehrere Filtrierungen gefiltert und gesäubert wird, die unter Maßnahmen wie Aktivkohle, mechanische, chemische Prozeduren und Molekülsieb ausgewählt werden können, um einen umweltfreundlichen Motor herzustellen.

16. Motorantrieb für die Inbetriebnahme der Prozedur gemäss den Patentansprüchen 1 und 2, cahrakterisiert durch eine Verbrennungskammer (2), welche mit einer Entspannungskammer (4) gekoppelt ist, dieselbe ausgestattet mit einem, durch eine Kontrollvorrichtung des Laufs gesteuerten Kolben (15), die einen Halt des Kolbens an seinem oberen Todpunkt während einer Drehwinkelperiode bis zu 1500° auslöst und sich aus einem Druckhebel (17, 17A, 17B, 17C) zusammensetzt, der selbst durch eine Stange (17D) an den Zapfen (18A) der Kurbelwelle (18) angeschlossen ist und um seine Achse (18B) dreht und somit durch eine Kompressor-Kurbelwelle (12) und eine Stange (11), einen Ansaug-Verdichtungskolben (9) in eine Verdichtungskammer (1) antreibt, die durch eine Leitung (5) an die Verbrennungskammer (2) angeschlossen ist, deren Öffnen und Schließen über eine dichte Klappe (6) gesteuert wird. Die Kurbelwelle (12) der Ansaug-Verdichtungskammer wird über eine mechanische Verbindung (21) durch die Motorkurbelwelle (18) angetrieben und verzögert im Zyklus integriert, damit der Entspannungskolben (15) seinen Todpunkt erreicht und innehält, während:
- der Öffnung der Klappe (6)
- des Füllens der Verbrennungskammer mit der durch den Verdichtungskolben (9) auf seinem oberen Todpunkt verdichteten Mischung
- des Schließens der Klappe (6)
- des Zündens durch die Kerze (3)
- und dem Verbrennen, was eine Druckerhöhung in der Kammer (2) auslöst und den Entspannungskolben (15) durch Auslösen eines sogenannten Arbeitstakts zurückdrückt.

17. Motorantrieb für die Inbetriebnahme der Prozedur gemäss Patentanspruch 3, **gekennzeichnet durch** die Tatsache, dass es aus einer Verbrennungskammer (2) besteht, die mit der Entspannungskammer (4) gekoppelt ist, dieselbe ausgestattet mit einem **durch** eine Kontrollvorrichtung des Wegs gesteuerten Kolben (15), die einen Halt des Kolbens an seinem oberen Todpunkt während einer langen Periode der Winkelrotation auslöst und sich aus einem Druckhebel (17, 17A, 17B, 17C) zusammensetzt, der selbst **durch** eine Stange (17D) an den Zapfen (18A) der Kurbelwelle (18) angeschlossen ist und um seine Achse (18B) dreht und somit **durch** eine Kompressor-Kurbelwelle (12) und eine Stange (11), einen Ansaug-Verdichtungskolben (9) in einer Verdichtungskammer (1) antreibt, die **durch** eine Leitung (5) an die Verbrennungskammer (2) angeschlossen ist, deren Öffnen und Schließen über eine dichte Klappe (6) gesteuert wird. Eine Pufferkapazität (22) befindet sich zwischen dem Kompressor, welcher **durch** eine Leitung (23) mit dieser verbunden ist. Ein Beschleunigungsventil (25) befindet sich zwischen dieser Pufferkapazität und der Leitung (5), das eine Kraftstoffeinspritzdüse (24) besitzt. Sobald der Kolben (15) an seinem Todpunkt angelangt ist und während seines Halts in dieser Position bleibt, wird die Klappe (6) geöffnet und die Kraftstoffeinspritzdüse (24) wird gesteuert, um in die Kammer (2) eine Ladung der verdichteten Mischung einzuführen, welche die Verbrennung auslöst, wodurch die Klappe schließt und die Zündung **durch** eine Kerze (3) gesteuert wird, um die Verbrennung auszulösen, was wiederum einen Druckanstieg in der Kammer (2) zur Folge hat und somit den Entspannungskolben (15) **durch** Auslösen eines sogenannten Arbeitstakts zurückdrückt.

18. Motorantrieb für die Inbetriebnahme der Prozedur gemäss Patentanspruch 7, **gekennzeichnet durch** die Tatsache, dass die Verbrennungskammer (2) eine Einspritzdüse für zusätzliche Druckluft erhält (24A), die **durch** einen Hochdruck-Außentank (23) gespeist wird, welcher bei Betrieb unter schwachen Leistungen, eine Dosis zusätzlicher Druckluft einspritzt, obwohl die Kraftstoff-Einspritzdüse (24) noch nicht betätigt wurde und löst somit in der Verbrennungskammer (2) einen Druckanstieg aus, welcher einen Betrieb **durch** Entspannen während des Abstiegslaufs des Kolbens produziert.

19. Motorantrieb für die Inbetriebnahme der Prozedur gemäss Patentanspruch 3, **gekennzeichnet durch** die Tatsache, dass es aus einer Verbrennungskammer (2) besteht, die mit der Entspannungskammer (4) gekoppelt ist, dieselbe ausgestattet mit einem **durch** eine Kontrollvorrichtung des Wegs gesteuerten Kolben (15), die einen Halt des Kolbens an seinem oberen Todpunkt während einer langen Periode der Winkelrotation auslöst und sich aus einem Druckhebel (17, 17A, 17B, 17C) zusammensetzt, der selbst **durch** eine Stange (17D) an den Zapfen (18A) der Kurbelwelle (18) angeschlossen ist und um seine Achse (18B) dreht. Die besagte Verbrennungskammer wird **durch** eine Druckluft-Einspritzdüse (24A) gespeist, welche aus einem Hochdrucktank (23) kommt. Das Auslassventil (20) schließt die Austrittsleitung (19) und wird gesteuert, um sich leicht am unteren Todpunkt des Kolbens zu öffnen und sich während des Abstiegswegs des Kolbens (15) zu schließen, um in der Expansionskammer (2) das Restgas zu verdichten, welches eine Kugel heißer Druckluft produziert, in die nach Halt des Kolbens an seinem oberen Todpunkt eine neue Dosis zusätzlicher Druckluft eingespritzt wird, was einen Druckanstieg der besagten Kammer zur Folge hat und während der Entspannung zu Beginn des Abstiegswegs des Kolbens (15) einen Betrieb produziert.

20. Motorantrieb für die Inbetriebnahme der Prozedur gemäss Patentanspruch 10 bis 14, **gekennzeichnet durch** die Tatsache, dass zwischen dem Sammeltank (23) und der Einspritzdüse für zusätzliche Druckluft (24A) ein Kolben (54) eingebaut ist, der direkt an die Motorwelle (18) angeschlossen ist und in einem Blindzylinder (55) gleitet, und somit eine Betriebskammer (35) bildet, in der einerseits eine Füllleitung von Hochdruckluft (37), deren Öffnen und Schließen **durch** en Elektroventil gesteuert ist (38) und andererseits eine Ablassleitung von Hochdruckluft (39) verbunden mit einem thermischen Austauscher Luft-Luft oder Kühler (41) angeschlossen ist, welcher selber **durch** eine Leitung (42) an eine Pufferkapazität mit quasi konstantem Auspuffdruck angeschlossen ist. Die mit sehr hohem Druck beaufschlagte Druckluft entspannt sich **durch** Zusammendrücken des Kolbens und produziert einen Betrieb mit Absinken der Temperatur und wird anschließend zum Luft-Luft-Kühler (41) zurückgeführt (F), um sich aufzuwärmen und den Druck und/oder das Volumen zu erhöhen.

21. Motorantrieb für die Inbetriebnahme der Prozedur gemäss Patentanspruch 10 bis 14, **gekennzeichnet durch** die Tatsache, dass sich zwischen dem Hochdruck-Sammeltank (23) und der Einspritzdüse für zusätzliche Druckluft (24A) einen thermischen Aufwärmer (56) befindet, der sich aus Brennern (57) zusammensetzt, welche die Temperatur und somit den Druck und/oder das Druckluftvolumen (F) aus dem Hochdrucktank (23) während des Durchlaufs der Heizschlangen (58) erhöhen

22. Motorantrieb gemäss Patentanspruch 21, **gekennzeichnet durch** die Tatsache, dass die aus dem Hochdrucktank (23) stammende Druckluft einen Luft-Luft-Austauscher gemäss Patentanspruch 20 durchläuft.

23. Motorantrieb für die Inbetriebnahme der Prozedur gemäss den Patentansprüchen 13 und 14, **gekennzeichnet durch** die Tatsache, dass die Kontrollvorrichtung des Kolbenlaufs, die den Halt des Kolbens auf seinem oberen Todpunkt während einer langen Periode der Winkelrotation auslöst und sich aus einem Druckhebel (17, 17A, 17B, 17C) zusammensetzt, der selbst **durch** eine Stange (17D) an den Zapfen (18A) der Kurbelwelle (18) angeschlossen ist und um seine Achse (18B) dreht, in einem Zylinder (16) gleitet, der mit einem Zylinderkopf (11) verschlossen ist, welcher aus einer gekoppelten Verbrennungskammer (2) besteht, in der einerseits eine Füllleitung endet, die selber eine Kraftstoff-Einspritzdüse (24) besitzt, deren Öffnen und Schließen **durch** ein Ventil (14A) gesteuert wird, und andererseits eine Ablassleitung (19) deren Öffnen und Schließen **durch** ein Ventil (20) gesteuert wird, das sich je nach Betriebsmodus alle zwei Motordrehungen während der Absinkphase des Kolbens, oder alle Drehungen während eines Abschnitts der Abstiegphase des Kolbens öffnen kann, sowie einer Zündkerze (3) und einer Einspritzdüse für zusätzliche Druckluft (24A), die **durch** einen Hochdruck-Sammeltank mit Druckluft versorgt wird (23). Diese Gruppe gestattet, den Motor gemäss zwei Modi zu betreiben: entweder **durch** zusätzliche Druckluft für schwache Leistungen, oder **durch** Kraftstoffladung mit herkömmlichem Kraftstoff für höhere Leistungen.

## Claims

1. Operating method for an engine with an induction-compression chamber, an expansion-exhaust chamber, both operating using reciprocating pistons, and with a combustion chamber, the three chambers being separate, **characterized in that** there is provided, at least on the expansion-exhaust chamber, a device for controlling the stroke of the piston of said chamber causing this piston to stop at its top dead center, and **in that** the combustion chamber is mounted twinned with no shutter on the top part of the expansion-exhaust cylinder, the piston practically separating the combustion chamber from the expansion-exhaust chamber at its top dead center.

2. Engine operating method according to claim 1, **characterized in that** the operating cycle of the induction-compression chamber is retarded with respect to the cycle of the expansion-exhaust chamber so that the piston of the latter, reaching its top dead center, is in advance of the top dead center of the piston of the induction-compression chamber and remains at its top dead center during the following operations:
- communication between the combustion chamber and the induction-compression chamber,
- filling of said combustion chamber with the air-fuel mixture compressed by the piston of the induction-compression chamber reaching its top dead center,
- closure of the communication between the combustion chamber and the induction-compression chamber,
- ignition and combustion of the mixture which generates an increase in pressure,
then, as soon as it begins its downstroke, produces work brought about by the increase in pressure.

3. Engine operating method according to claims 1 and 2, **characterized in that** the engine operates with heterogeneous self-igniting mixtures, in which method a fuel injector is actuated to bring about combustion as soon as the combustion chamber is isolated from the induction-compression chamber.

4. Engine operating method according to claims 1 to 3, **characterized in that** the combustion chamber is a portion of a sphere twinned with the expansion and exhaust chamber.

5. Engine operating method according to any one of claims 1 to 4, **characterized in that** at least one of the chambers - combustion and expansion - is coated with a thermal barrier made of lagging insulating material.

6. Engine operating method according to any one of claims 1 to 5, **characterized in that** fitted between the chamber for the induction and compression of fresh gases and the twinned independent combustion chamber is a buffer volume for the gases thus compressed so as to avoid surge effects and pressure drops which are due to the dead transfer volume between the chambers, and to the partial expansion of the gases while the combustion chamber is filling, a connecting duct and its system of controlled opening and closure therefore being located between the buffer volume and the combustion chamber.

7. Engine operating method according to any one of claims 1 to 6 used in dual energy and dual mode operation, **characterized in that** when operating at low power, for example in urban traffic, the induction-compression chamber is no longer supplied with fuel and **in that** there is introduced into the combustion chamber, appreciably after the (fuel-free) compressed air from the induction-compression chamber has been let into this chamber, a dose of supplementary compressed air from an external reservoir in which the air is stored under an initial high pressure, for example 200 bar and at ambient temperature, this dose of supplementary compressed air at ambient temperature, on contact with the mass of air at high temperature contained in the combustion chamber which in this case becomes an expansion chamber, heating up, expanding and increasing the pressure prevailing in the combustion chamber so as during expansion to allow the delivery of motive power, and **in that** when operating at high power, for example on the highway, the engine is supplied with fuel and operates according to any one of claims 1 to 6.

8. Engine operating method according to any one of claims 1 to 6 used in single energy and single mode air plus supplementary compressed air operation, **characterized in that** all the elements needed for supplying the engine with a conventional fuel are omitted, and **in that** there is introduced into the combustion chamber, appreciably after (fuel-free) compressed air from the induction-compression chamber has been let into this chamber, a dose of supplementary compressed air from an external reservoir in which air is stored under initial high pressure, for example 200 bar and ambient temperature, this dose of supplementary compressed air at ambient temperature, on contact with the mass of air at high temperature contained in the combustion chamber which in this case becomes an expansion chamber, heating up, expanding and increasing the pressure prevailing in the combustion chamber to allow motive power to be delivered upon expansion.

9. Single-mode compressed-air operating method for an engine, comprising an expansion-exhaust chamber operating with the aid of a piston sliding in a cylinder, and equipped with an exhaust port and a twinned independent expansion chamber, **characterized in that** the expansion-exhaust chamber is equipped with a device for controlling the stroke of the piston causing the latter to stop at its top dead center, in which the induction-compression cylinder has been omitted and **in that**, during the upstroke of the piston of the expansion-exhaust chamber, during the exhaust cycle, the exhaust port is closed off to allow some of the previously expanded gases to be recompressed to a high temperature and high pressure in the expansion chamber into which, while the piston is stationary at its top dead center, a dose of supplementary compressed air from a storage reservoir is injected, thus causing an increase in pressure in the expansion chamber, this producing work by driving the piston back in its downstroke.

10. Engine operating method according to any one of claims 7 to 9, **characterized in that**, before being introduced into the expansion chamber, the compressed air contained in the high-pressure storage reservoir is expanded with work producing a drop in its temperature and is then sent into an exchanger to exchange heat with the ambient air to heat it up and thus increase its pressure and/or its volume by recovering ambient heat energy.

11. Engine operating method according to any one of claims 7 to 10, **characterized in that** before being introduced into the expansion chamber, the compressed air from the storage reservoir is routed either directly or having passed through the air-air heat exchanger, into a thermal heater where its pressure and/or its volume can increase still further.

12. Engine operating method according to claim 9, used in dual energy operation, **characterized in that** the cycle for the opening and closure of the exhaust valve which opens on every engine cycle over part of the piston upstroke varies during operation to open during the piston upstroke every two revolutions and **in that** the engine is equipped with an air and fuel inlet which introduces into the cylinder a charge of carburetted mixture which is drawn in during the piston downstroke and then compressed in the twinned expansion chamber, which then becomes a combustion chamber, in which the mixture is burnt and then expanded, producing work by driving the piston back and is then discharged in the exhaust according to the conventional four-stroke engine cycle.

13. Engine operating method according to any one of claims 1 to 11, in three-mode use, **characterized in that** the engine operates either with compressed air without heat and with zero pollution, or with a compressed air that has been heated by external combustion in a thermal heater supplied with a conventional fuel with practically zero pollution, or with internal combustion by letting in air and fuel, allowing a charge of carburetted mixture to be introduced into the expansion chamber, in which the mixture is burnt and then expanded, producing work and discharged in the exhaust according to the conventional four-stroke engine cycle, thus achieving three-mode operation.

14. Engine operating method in three-mode use according to claim 13, **characterized in that** the three operating modes described hereinabove - air plus supplementary compressed air, air plus supplementary compressed air heated by a burner, air plus fuel - may be used separately or in combination.

15. Engine operating method according to any one of claims 7 to 13, **characterized in that** the air drawn in by the engine is filtered and purified through one or more filtration stages chosen from active-charcoal methods, mechanical methods, chemical methods and molecular sieves, so as to achieve a pollution-reducing engine.

16. Engine device for implementing the method according to one of claims 1 and 2, **characterized in that** it comprises a combustion chamber (2) which is twinned with the expansion chamber (4) which itself comprises a piston (15) controlled by a device for controlling the piston stroke, causing the piston to stop at its top dead center for a period of angular rotation which may be as much as 150°, and consisting of a pressure lever (17, 17A, 17B, 17C) itself controlled by a connecting rod (17D) connected to the wrist (18A) of an engine crankshaft (18) rotating about its axis (18B) and driving, via a compressor crankshaft (12) and a connecting rod (11), an induction-compression piston (9) in a compression chamber (1) connected to the combustion chamber (2) by a duct (5), the opening and closure of which are controlled by a sealed shutter (6), and **characterized in that** the crankshaft (12) of the induction-compression chamber is driven through a mechanical link (21) by the engine crankshaft (18) and timed with a retard in the cycle so that the expansion-exhaust piston (15) arrives and remains at its top dead center while:
- the shutter (6) opens,
- the combustion chamber fills with the mixture compressed by the compression piston (9) reaching its top dead center,
- the shutter (6) closes,
- the spark plug (3) causes ignition,
- and combustion takes place, generating an increase in pressure in the chamber (2) and driving back the expansion piston (15), producing work known as the power stroke.

17. Engine device for implementing the method according to claim 3, **characterized in that** it comprises a combustion chamber (2) which is twinned with the expansion chamber (4) which comprises a piston (15) controlled by a device for controlling the piston stroke, causing the piston to stop at its top dead center for a long period of angular rotation, this control device consisting of a pressure lever (17, 17A, 17B, 17C) itself controlled by a connecting rod (17D) connected to the wrist (18A) of an engine crankshaft (18) rotating about its axis (18B) and driving, via a compressor crankshaft (12) and a connecting rod (11), an induction-compression piston (9) in a compression chamber (1) connected to the combustion chamber (2) by a duct (5), the opening and closure of which are controlled by a sealed shutter (6), **in that** a buffer volume (22) is placed between a compressor which is connected to this volume by a duct (23), **in that** a throttle valve (25) is inserted between this buffer volume and the duct (5) comprising a fuel injector (24), and **in that** as soon as the piston (15) reaches its top dead center, and while it is stationary in this position, the shutter (6) is opened and the fuel injector (24) is actuated to introduce a charge of compressed mixture into the chamber (2), then the shutter is closed again and ignition is initiated by a spark plug (3) to cause combustion which will generate an increase in pressure in the chamber (2) and drive the expansion piston (15) back, producing work known as the power stroke.

18. Engine device for implementing the method according to claim 7, **characterized in that** the combustion chamber (2) takes a supplementary compressed air injector (24A) fed from a high-pressure storage reservoir (23), and which, during low-power operation, injects a dose of supplementary compressed air while the fuel injector (24) is not actuated, and causes an increase in pressure in the combustion chamber (2) which produces work by expanding during the piston downstroke.

19. Engine device for implementing the method according to claim 9, **characterized in that** the expansion chamber (2) is twinned with the expansion chamber (4) which comprises a piston (15) controlled by a device for controlling the piston stroke, causing the piston to stop at its top dead center for a long period of angular rotation and consisting of a pressure lever (17, 17A, 17B, 17C) itself controlled by a connecting rod (17D) connected to the wrist (18A) of an engine crankshaft (18) rotating about its axis (18B), said combustion chamber being supplied by an injector (24A) of supplementary compressed air from a high-pressure reservoir (23), and **in that** the exhaust valve (20) which closes off the exhaust duct (19) is made to open at practically bottom dead center of the piston and to close again during the upstroke of said piston (15) so as to recompress in the expansion chamber (2) the remaining gas left there, producing a hot mass of compressed air into which, as soon as the piston stops at. its top dead center, a fresh dose of supplementary compressed air is injected, causing the pressure in said chamber to rise and producing work during expansion right from the start of the downstroke of the piston (15).

20. Engine device for implementing the method according to claim 10 to 14, **characterized in that** located between the storage reservoir (23) and the supplementary compressed air injector (24A) is a piston (54) coupled directly to the drive shaft (18) and which slides in a blind cylinder (55) forming a work chamber (35) into which there open, on the one hand, a high-pressure air intake duct (37), the opening and closure of which are controlled by an electrically operated valve (38) and, on the other hand, an exhaust duct (39) connected to the air-air heat exchanger or radiator (41) itself connected by a duct (42) to a buffer volume (43) at a practically constant end-use pressure, and **in that** the very-high-pressure compressed air expands, driving back the piston and producing work with a lowering of the temperature and is then discharged (F) to the air-air exchanger (41) to heat up and increase in pressure and/or in volume.

21. Engine device for implementing the method according to claim 10 to 14, **characterized in that** located between the high-pressure storage reservoir (23) and the supplementary compressed air injector (24A) is a thermal heater (56) consisting of burners (57) which increase the temperature and therefore the pressure and/or the volume of the compressed air originating (F) from the high-pressure reservoir (23) as it passes through the exchange coil (58).

22. Engine device according to claim 21, **characterized in that** the compressed air from the high-pressure reservoir (23) passes through an air-air exchanger according to claim 20.

23. Engine device for implementing the method according to claims 13 and 14, **characterized in that** the device for controlling the stroke of the piston, causing the piston to stop at its top dead center for a long period of angular rotation, consists of a pressure lever (17, 17A, 17B, 17C) itself controlled by a connecting rod (17D) connected to the wrist (18A) of a crankshaft (18) rotating about its axis (18B) slides in a cylinder (16) topped by a cylinder head (11) comprising a twinned combustion chamber (2) into which there open, on the one hand, an intake duct itself comprising a fuel injector (24), the opening and closure of which are controlled by a valve (14A) and, on the other hand, an exhaust duct (19), the opening and closure of which are controlled by a valve (20) which may, depending on the mode of operation, open either every two engine revolutions during the piston upstroke or every revolution during just part of the piston upstroke, and a spark plug (3) and a supplementary compressed air injector (24A) supplied with compressed air by a high-pressure compressed air storage reservoir (23), this assembly allowing the engine to be operated in two modes, either supplied with supplementary compressed air for low power, or supplied with a carburetted charge using conventional fuel, for higher powers.
